# EUROPEAN PATENT SPECIFICATION

(11) **EP 3 337 206 B1**
(45) Date of publication and mention of the grant of the patent: **06.11.2019**
(21) Application number: 15885187.3
(22) Date of filing: 23.09.2015
(51) Int. Cl.: H04W 8/20, H04W 8/26

(54) **EUICC AND ACTIVATION METHOD THEREOF, INTERNET OF THINGS SYSTEM, REMOTE SUBSCRIPTION MANAGEMENT PLATFORM**
EUICC UND AKTIVIERUNGSVERFAHREN DAFÜR, INTERNET-DER-DINGE-SYSTEM, FERNABONNEMENTVERWALTUNGSPLATTFORM
EUICC ET PROCÉDÉ D'ACTIVATION CORRESPONDANT, SYSTÈME D'INTERNET DES OBJETS, ET PLATE-FORME DE GESTION D'ABONNEMENT À DISTANCE

(30) Priority: 14.08.2015 CN 201510500964
(43) Date of publication of application: 20.06.2018
(73) Proprietor: ZTE Corporation, Shenzhen, Guangdong 518057 (CN)
(72) Inventor: WU, Chuanxi, Shenzhen, Guangdong 518057 (CN)
(74) Representative: Iannone, Carlo Luigi
(86) International application number: PCT/CN2015/090357
(87) International publication number: WO 2016/145815

(56) References cited:
- WO-A1-2014/067093
- WO-A1-2015/027485
- CN-A- 103 118 356
- CN-A- 103 118 356
- CN-A- 103 533 634
- CN-A- 103 634 791
- CN-A- 103 782 568
- CN-A- 104 469 737

## Description

### TECHNICAL FIELD

The invention relates to the technical field of internet-of-things communications, and in particular to an embedded Universal Integrated Circuit Card (eUICC) and an activation method therefor, and a storage medium.

### BACKGROUND

The internet of things is referred to as the third wave of the world information industry after the computer and the internet, and is representative of a development direction of a next generation information technology. The United States, the European Union, China and other countries make plans for the development of the internet-of-things one after another and provide prospective layouts for related technologies and industries. With popularization of an internet-of-things technology, more and more traditional commodities such as a vehicle, a smart watch and monitoring equipment are embedded with an eUICC to become an internet-of-things terminal. That is, an eUICC chip is directly soldered on a circuit board of a terminal or directly packaged to a communication module.

The eUICC, serving as an authentication tool for access of the internet-of-things terminal to an operator network and a safe carrier for carrying various applications (APPs) and data, has become a key technology for the development of the internet-of-things. The eUICC applied to internet-of-things services is not only a new form of UICC or a user terminal equipment, but also includes an overall system set up for supporting this new form of equipment, wherein eUICC activation and deactivation management, user relationship management, remote management, service management and safety management may be essential functions in this system. The quantity of objects in the internet of things will be higher than the quantity of terminals in any one of previous networks by several magnitudes. If an internet-of-things application is developed in an existing technical system, it is necessary to provide sufficient code number resources to mark terminals or users distributed in a network, so the existing code number resources will be very lacking. This is a challenge to a length, allocation principle and recycling method of the existing code number.

In addition, a telecom eUICC in a current mobile network is issued by using a network management region (province, prefecture and city) method depending on where it is issued, where it is used and what it is used for. However, in an internet-of-things application scenario, it is difficult to determine where the eUICC will be issued and used during production of the internet-of-things terminal because the eUICC usually exists in the internet-of-things terminal or is soldered into the terminal. In this application scenario, it is necessary to consider services such as activation of an internet-of-things eUICC used for the first time, operation configuration replacement after activation and the like. Therefore, new demands for management of the eUICC in the internet-of-things, and particularly, the problems of over-the-air number distribution, activation, deactivation, configuration replacement management of the eUICC and the like must be urgently solved.

D1 (CN 103118356 A) provides an embedded type intelligent card e universal integrated circuit card (eUICC) activating method, system, terminal and platform. The method comprises: acquiring a dynamic temporary code number according to a UICC activating request of users, wherein the UICC activating request comprises an international mobile subscriber recognition code international mobile subscriber identify (IMSI) and eUICC identification code eUICCID corresponding to eUICC to be activated; correlating the IMSI and the dynamic temporary number, and sending successful opening information comprising the dynamic temporary code number to terminals provided with the eUICC to be activated to enable the terminals to utilize the IMSI and the dynamic temporary code number to access to an operator network; receiving a code number releasing request comprising the dynamic temporary code number sent by a UICC remote management platform after receiving successful opening information sent by the terminals; and releasing the dynamic temporary code number according to the code number releasing request.

D2 (WO 2014/067093 A1) provides a method and device for network switching, the method including: sending a temporary operational file request to a remote management platform of a second operator network if a first operator network signal losing notification sent from a terminal is received; receiving the temporary operational file returned from the remote management platform of the second operator network and the effective time of the temporary operational file; indicating the terminal to detect the signal strength of the first operator network, and accessing the second operator network using the temporary operational file; before the end of the effective time of the temporary operational file, re-accessing the first operator network if the first operator network signal recovery is determined according to the signal strength of the first operator network.

### SUMMARY

In view of this, in order to solve at least one of the problems in the related art, embodiments of the invention are provided according to the claims.

Portions of the description relating to a eUICC itself, to an internet-of-things system an to a remote subscription management platform do not fall under the scope of the present claims and are retained merely as examples useful for understanding the invention.

The technical solutions of the embodiments of the invention are implemented as follows.

According to a first aspect, an embodiment of the invention provides a method for activating an eUICC. The method includes steps as follows.

A remote subscription management platform sends an activation instruction message to an eUICC according to identification information of the eUICC (eUICC ID) sent by a target operator, the activation instruction message carrying a temporary code number and an International Mobile Subscriber Identification Number (IMSI) sent by the target operator, the activation instruction message being configured to instruct the eUICC to activate a profile of the target operator by using the temporary code number and the IMSI.

The remote subscription management platform receives an access result message sent by the eUICC, the access result message including the eUICC ID and identification information of the target operator, the access result message being configured to indicate whether a terminal corresponding to the eUICC has successfully accessed a network of the target operator.

When the access result message indicates that the terminal has successfully accessed the network of the target operator, the remote subscription management platform sends a code number release request message to the eUICC according to the eUICC ID, the code number release request message being configured to trigger the eUICC to release the temporary code number of the target operator.

According to a second aspect, an embodiment of the invention provides a method for activating an eUICC. The method includes steps as follows.

An eUICC receives an activation instruction message sent by a remote subscription management platform, the activation instruction message carrying an IMSI and a temporary code number corresponding to the IMSI sent by a target operator.

The eUICC activates a profile of the target operator based on the activation instruction message.

After the activation is completed, the eUICC associates the IMSI with the temporary code number.

After the association is completed, the eUICC sends an enabling success message to a corresponding terminal, the enabling success message carrying the temporary code number, the enabling success message being configured to trigger the terminal to access a network of the target operator by using the temporary code number.

The eUICC receives an access result message sent by the terminal, the access result message being configured to indicate whether the terminal has successfully accessed the network of the target operator.

The eUICC sends an access result message to the remote subscription management platform, the access result message comprising identification information of the eUICC, eUICC ID, and identification information of the target operator.

The eUICC receives a code number release request message sent by the remote subscription management platform, the code number release request message being configured to trigger the eUICC to release the temporary code number of the target operator.

The eUICC releases the temporary code number of the target operator based on the code number release request message.

After the release is completed, the eUICC sends a successful activation message to the remote subscription management platform.

According to a third aspect, an embodiment of the invention provides a method for activating an eUICC. The method includes steps as follows.

A remote subscription management platform receives a deactivation request message sent by a target operator, the deactivation request message carrying an International Mobile Subscriber Identification Number (IMSI) corresponding to an eUICC and identification information of the eUICC (eUICC ID).

The remote subscription management platform sends a deactivation instruction message to the eUICC according to the eUICC ID, the deactivation instruction message carrying the IMSI, the deactivation instruction message being configured to instruct the eUICC to deactivate a profile of the target operator by using the IMSI.

The remote subscription management platform receives a deactivation result message sent by the eUICC, the deactivation result message including the eUICC ID and identification information of the target operator, the deactivation result message being configured to indicate whether the profile of the target operator has been successfully deactivated.

When the deactivation result message indicates that the profile of the target operator has been successfully deactivated, the remote subscription management platform updates a first field in an eUICC information set from an activated state to a non-activated state according to the eUICC ID.

According to a fourth aspect, the invention provides a remote subscription management platform. The remote subscription management platform includes a first sending unit, a first receiving unit and a second sending unit, wherein
the first sending unit is configured to send an activation instruction message to an eUICC according to an eUICC ID sent by a target operator, the activation instruction message carrying a temporary code number and an IMSI sent by the target operator, the activation instruction message being configured to instruct the eUICC to activate a profile of the target operator by using the temporary code number and the IMSI;
the first receiving unit is configured to receive an access result message sent by the eUICC, the access result message including the eUICC ID and identification information of the target operator, the access result message being configured to indicate whether a terminal corresponding to the eUICC has successfully accessed a network of the target operator; and
the second sending unit is configured to send, when the access result message indicates that the terminal has successfully accessed the network of the target operator, a code number release request message to the eUICC according to the eUICC ID, the code number release request message being configured to trigger the eUICC to release the temporary code number of the target operator.

According to a fifth aspect, the invention provides an eUICC. The eUICC includes a sixth receiving unit, an association unit and a sixth sending unit, wherein
the sixth receiving unit is configured to receive an activation instruction message sent by a remote subscription management platform, the activation instruction message carrying an IMSI and a temporary code number corresponding to the IMSI sent by a target operator;
the association unit is configured to activate a profile of the target operator based on the activation instruction message, and associate, after the activation is completed, the IMSI with the temporary code number; and
the sixth sending unit is configured to send, after the association is completed, an enabling success message to a corresponding terminal, the enabling success message carrying the temporary code number, the enabling success message being configured to trigger the terminal to access a network of the target operator by using the temporary code number.

According to a sixth aspect, the invention provides a remote subscription management platform. The remote subscription management platform includes a fourth receiving unit, a fifth sending unit, a fifth receiving unit and a third updating unit, wherein
the fourth receiving unit is configured to receive a deactivation request message sent by a target operator, the deactivation request message carrying an IMSI corresponding to an eUICC and an eUICC ID;
the fifth sending unit is configured to send a deactivation instruction message to the eUICC according to the eUICC ID, the deactivation instruction message carrying the IMSI, the deactivation instruction message being configured to instruct the eUICC to deactivate a profile of the target operator by using the IMSI;
the fifth receiving unit is configured to receive a deactivation result message sent by the eUICC, the deactivation result message including the eUICC ID and identification information of the target operator, the deactivation result message being configured to indicate whether the profile of the target operator has been successfully deactivated; and
the third updating unit is configured to update, when the deactivation result message indicates that the profile of the target operator has been successfully deactivated, a first field in an eUICC information set from an activated state to a non-activated state according to the eUICC ID.

According to a seventh aspect, the invention provides an internet-of-things system. The internet-of-things system includes a remote subscription management platform and an eUICC.

The remote subscription management platform includes a first sending unit, a first receiving unit and a second sending unit, wherein
the first sending unit is configured to send an activation instruction message to the eUICC according to an eUICC ID sent by a target operator, the activation instruction message carrying a temporary code number and an IMSI sent by the target operator, the activation instruction message being configured to instruct the eUICC to activate a profile of the target operator by using the temporary code number and the IMSI;
the first receiving unit is configured to receive an access result message sent by the eUICC, the access result message including the eUICC ID and identification information of the target operator, the access result message being configured to indicate whether a terminal corresponding to the eUICC has successfully accessed a network of the target operator; and
the second sending unit is configured to send, when the access result message indicates that the terminal has successfully accessed the network of the target operator, a code number release request message to the eUICC according to the eUICC ID, the code number release request message being configured to trigger the eUICC to release the temporary code number of the target operator.

The eUICC includes a sixth receiving unit, an association unit and a sixth sending unit, wherein
the sixth receiving unit is configured to receive the activation instruction message sent by the remote subscription management platform, the activation instruction message carrying the IMSI and the temporary code number corresponding to the IMSI sent by the target operator;
the association unit is configured to activate the profile of the target operator based on the activation instruction message, and associate, after the activation is completed, the IMSI with the temporary code number; and
the sixth sending unit is configured to send, after the association is completed, an enabling success message to a corresponding terminal, the enabling success message carrying the temporary code number, the enabling success message being configured to trigger the terminal to access the network of the target operator by using the temporary code number.

A seventh receiving unit is configured to receive the access result message sent by the terminal, the access result message being configured to indicate whether the terminal has successfully accessed the network of the target operator.

A seventh sending unit is configured to send an access result message to the remote subscription management platform, the access result message including the eUICC ID and the identification information of the target operator.

According to an eighth aspect, the disclosure provides a method for activating an eUICC. The method further includes steps as follows.

A remote subscription management platform receives an activation request message sent by a target operator, the activation request message carrying an IMSI corresponding to an eUICC and an eUICC ID.

The remote subscription management platform validates the eUICC.

After the validation is passed, the remote subscription management platform carries the eUICC ID and the IMSI in an activation instruction message.

The remote subscription management platform sends the activation instruction message to the eUICC according to the eUICC ID, the activation instruction message being configured to instruct the eUICC to activate a profile of the target operator by using the IMSI.

According to a ninth aspect, the invention provides a remote subscription management platform. The remote subscription management platform further includes a ninth receiving unit, a validation unit, a second carrying unit and an eighth sending unit, wherein
the ninth receiving unit is configured to receive an activation request message sent by a target operator, the activation request message carrying an IMSI corresponding to an eUICC and an eUICC ID;
the validation unit is configured to validate the eUICC according to the eUICC ID;
the second carrying unit is configured to carry, after the validation is passed, the eUICC ID and the IMSI in an activation instruction message; and
the eighth sending unit is configured to send the activation instruction message to the eUICC according to the eUICC ID, the activation instruction message being configured to instruct the eUICC to activate a profile of the target operator by using the IMSI.

According to a tenth aspect, an embodiment of the invention provides a computer storage medium. The computer storage medium stores computer-executable instructions for executing a method for activating an eUICC according to the embodiment in any one aspect of the invention.

The embodiments of the invention provide an eUICC and an activation method therefor, an internet-of-things system, a remote subscription management platform, and a storage medium. A remote subscription management platform sends an activation instruction message to an eUICC according to an eUICC ID sent by a target operator, the activation instruction message carrying a temporary code number and an IMSI sent by the target operator; the remote subscription management platform receives an access result message sent by the eUICC, the access result message including the eUICC ID and identification information of the target operator, the access result message being configured to indicate whether a terminal corresponding to the eUICC has successfully accessed a network of the target operator; and when the access result message indicates that the terminal has successfully accessed the network of the target operator, the remote subscription management platform sends a code number release request message to the eUICC according to the eUICC ID, the code number release request message being configured to trigger the eUICC to release the temporary code number of the target operator. Thus, temporary code number resources can be recovered in time, thereby improving efficiency of a management of an eUICC.

### BRIEF DESCRIPTION OF DRAWINGS

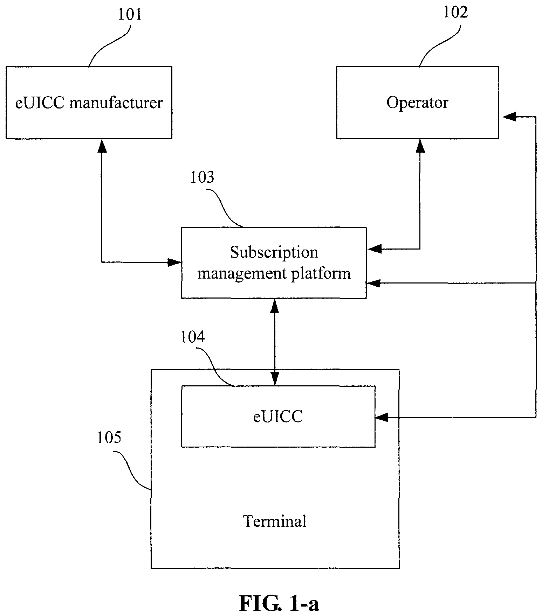

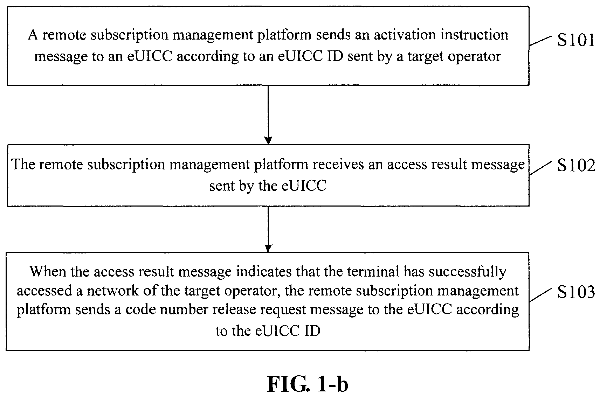

FIG. 1-a is a schematic diagram showing a composition of an internet-of-things system according to an embodiment of the invention.
FIG. 1-b is a flowchart of a method for activating an eUICC according to a first embodiment of the invention.
FIG. 2 is a flowchart of a method for activating an eUICC according to a second embodiment of the invention.
FIG. 3 is a flowchart of a method for activating an eUICC according to a first example of the invention.
FIG. 4 is a flowchart of a method for activating an eUICC according to a second example of the invention.
FIG. 5 is a flowchart of a method for deactivating an eUICC according to a third example of the invention.
FIG. 6 is a flowchart of a method for activating an eUICC according to a fourth example of the invention.
FIG. 7 is a flowchart of a method for activating an eUICC according to a third embodiment of the invention.
FIG. 8 is a schematic diagram showing a composition of an internet-of-things system according to an fourth embodiment of the invention.
FIG. 9 is a schematic diagram showing a composition of an internet-of-things system according to a fifth embodiment of the invention.

### DETAILED DESCRIPTION

FIG. 1-a is a schematic diagram showing a composition of an internet-of-things system according to an embodiment of the invention. As shown in FIG. 1-a, the internet-of-things system includes an eUICC manufacturer 101, an operator 102, a subscription management platform 103, an eUICC 104 and a terminal 105, wherein the eUICC 104 is directly soldered onto a circuit board of the terminal 105 or directly packaged into a communication module of the terminal 105.

From FIG. 1-a, it can be seen that after the eUICC is produced by the eUICC manufacturer, the eUICC will be soldered or packaged into an internet-of-things terminal. A user selects an operator at the very beginning, and when the user wants to change the operator, the internet-of-things terminal selects a profile of an operator via an interface between the eUICC and the terminal, so as to implement replacement between operators. It is clear that the operator is updated by changing the profile of the operator without changing the eUICC. Therefore, in an internet of things, the life cycle of the eUICC is not linear.

The life cycle of a UICC on a traditional terminal is linear. The life cycle of the UICC on the traditional terminal includes several phases such as card making by an UICC manufacturer, operator selection, customizing, issuing, activation, indication, and subscription termination. A linear life cycle presents an irreversible characteristic. After the UICC is introduced into the internet of things, the life cycle of the UICC has been redefined, including pre-release and post-release phases. The pre-release phase includes card making, issuing and operator selection, and the post-release phase includes operator selection, operator change, using, and subscription termination. Herein, after a card is issued, an operator may still be selected and changed. It is clear that the life cycle of the eUICC is not linear. Since the life cycle of the eUICC is not linear, the activation process for the eUICC is different from that for the traditional UICC in the process of using the eUICC. Therefore, the inventor of the present application provides a method for activating an eUICC in an internet-of-things.

The method for activating an eUICC in the embodiment of the invention will be introduced below with reference to FIG. 1-a. Activation of an eUICC refers to: enabling a profile of an operator successfully installed on an eUICC to enter into an activated state. Before the eUICC is used for the first time, it is necessary to activate the eUICC. The remote subscription management platform 103 activates a profile currently in a deactivated state on the eUICC 104, thereby enabling files and applications in the profile to be selected via an interface between the terminal 105 and the eUICC 104.

Herein, the activation refers to acquiring and storing, by the eUICC, a profile of a service operator. The profile is basic information for providing a terminal with a first communication service, and the basic information includes some configuration files and applications. Specifically, the activation process can be completed by using an operator network to which a terminal provided with an eUICC to be activated will access by using an IMSI corresponding to the eUICC to be activated and a temporary code number associated with the IMSI. When the profile is activated, the terminal may select the profile by using the interface between the eUICC and the terminal. After the terminal selects the profile, the terminal will be managed by an operator to which the profile pertains. For example, after a profile of an operator A on the eUICC is activated, the terminal may select the profile of the operator A by using the interface between the eUICC and the terminal, so that the terminal may receive services provided by the operator A.

The deactivation refers to: enabling, by the remote subscription management platform, a profile currently in an activated state on the eUICC to enter into a non-activated state according to a request of an operator or a user. This non-activation state may be interpreted as an invalid state. In this non-activated state, the files and applications in the profile cannot be selected via the interface between the terminal and the eUICC. For example, once the profile of the operator A is deactivated, the terminal cannot select the profile of the operator A via the interface between the eUICC and the terminal, and the terminal cannot receive the services of the operator A any longer.

A current solution for activating the UICC is implemented as follows usually. A unique IMSI and temporary code number are allocated to each UICC in advance, the temporary code number being associated with or corresponding to the IMSI, and being stored in an operator system for a long time. However, in the case of the eUICC, a host terminal may dynamically possess profiles of multiple operators. Meanwhile, in the related art, too many temporary code number resources are reserved, this results in occupancy of a space of an operator system and seriously waste of the resources in the case of the eUICC.

The technical solution of the invention will be further elaborated below in conjunction with the drawings and specific embodiments in detail.

### First Embodiment

In order to solve the problems in the background, the embodiment of the invention provides a method for activating an eUICC. The method is applied to a remote subscription management platform. Functions implemented by the method for activating the eUICC may be implemented by calling program codes via a processor in the remote subscription management platform, and certainly, the program codes are stored in a computer storage medium. It is clear that the remote subscription management platform at least includes a processor and a storage medium.

FIG. 1-b is a flowchart of a method for activating an eUICC according to the first embodiment of the invention. As shown in FIG. 1-b, the method includes steps as follows.

In step S101, a remote subscription management platform sends an activation instruction message to an eUICC according to an eUICC ID sent by a target operator.

Here, the activation instruction message carries a temporary code number and an IMSI sent by the target operator, and the activation instruction message is configured to instruct the eUICC to activate a profile of the target operator by using the temporary code number and the IMSI.

Here, before the step S101, the method further includes the following steps: the remote subscription management platform receives an activation request message sent by the target operator, the activation request message carrying the IMSI corresponding to the eUICC and the eUICC ID; and the remote subscription management platform receives the temporary code number sent by the target operator, the temporary code number corresponding to the IMSI. It is important to note that the temporary code number may be carried in the activation request message, or may be sent to the remote subscription management platform by means of other signaling messages.

Here, after receiving the activation instruction message, the eUICC activates the profile of the target operator by using the temporary code number and the IMSI; then, the eUICC associates the IMSI with the temporary code number; after the association is completed, the eUICC sends an enabling success message to a corresponding terminal, the enabling success message carrying the temporary code number, the enabling success message being configured to enable the terminal to access a network of the target operator by using the temporary code number; then, the terminal accesses the network of the target operator according to the temporary code number and the IMSI in the enabling success message, and then the terminal sends an access result message to the eUICC, the access result message being configured to indicate whether the terminal has successfully accessed the network of the target operator; and then, the eUICC sends an access result message to the remote subscription management platform.

In step S102, the remote subscription management platform receives the access result message sent by the eUICC.

Here, the access result message includes the eUICC ID and identification information of the target operator, the access result message being configured to indicate whether the terminal has successfully activated the profile of the target operator.

In step 103, when the access result message indicates that the terminal has successfully accessed the network of the target operator, the remote subscription management platform sends a code number release request message to the eUICC according to the eUICC ID.

Here, the code number release request message is configured to trigger the eUICC to release the temporary code number of the target operator.

In the embodiment of the invention, the activation request message carries the identification information of the target operator, and the method further includes the steps as follows.

In step S104, the remote subscription management platform judges, according to the IMSI and the eUICC ID, whether a profile in an activated state is present on the eUICC currently, so as to obtain a first judgment result.

Here, when the eUICC is activated for the first time (that is, the eUICC is not enabled yet), there is no profile in an activated state is present on the eUICC. Therefore, a first identification information is null. When the eUICC is not activated for the first time (that is, the eUICC has been enabled, namely there is an operator currently serving the eUICC), the profile in the activated state is present on the eUICC currently. Therefore, the first identification information is identification information of a current operator, and the current operator is the operator currently serving the eUICC.

In step S105, the remote subscription management platform determines, according to the first judgment result, first identification information to be carried in the activation instruction message.

Here, the step that the remote subscription management platform determines, according to the first judgment result, the first identification information to be carried in the activation instruction message includes the following steps: when the first judgment result indicates that there is no profile in an activated state is present on the eUICC currently, the remote subscription management platform sets the first identification information as null; and when the first judgment result indicates that a profile in an activated state is present on the eUICC currently, the remote subscription management platform sets the first identification information as the identification information of the current operator, the current operator being an operator corresponding to the profile in the activated state.

In step S106, the remote subscription management platform carries the identification information of the target operator, the first identification information, the temporary code number and the IMSI in the activation instruction message.

In step S107, when the first judgment result indicates that a profile in an activated state is present on the eUICC currently, the remote subscription management platform acquires a policy rule of a current operator at least according to identification information of the current operator.

Herein, the policy rule of the current operator is a rule for specifying whether switching can be performed between the current operator and other operators.

In step S108, the remote subscription management platform judges, according to the policy rule of the current operator, whether to allow switching from a profile of the current operator to the profile of the target operator, so as to obtain a second judgment result.

In step S109, when the second judgment result indicates that switching from the profile of the current operator to the profile of the target operator is allowed, the remote subscription management platform sends the activation instruction message to the eUICC.

In step S110, the remote subscription management platform sends the second judgment result to the target operator.

From the implementation flow in the present embodiment, it can be seen that in an activation process, an operator allocates a temporary code number to an eUICC, and after activation is completed, the eUICC will release the temporary code number associated with an IMSI according to a request from a remote subscription management platform. Thus, it is unnecessary for the operator to store the temporary code number associated with the IMSI for the eUICC for a long time, thereby avoiding occupancy of a system space of the operator. Moreover, because the temporary code number is released in time, the temporary code number can be dynamically cycled, thereby avoiding waste of a temporary code number resource. It is clear that the temporary code number in the technical solution provided in the embodiment of the invention actually is a dynamic temporary code number.

### Second Embodiment

On the basis of the first embodiment, an embodiment of the invention provides a method for activating an eUICC. The method is applied to a remote subscription management platform. Functions implemented by the method for activating an eUICC may be implemented by calling program codes via a processor in the remote subscription management platform, and certainly, the program codes are stored in a computer storage medium. It is clear that the remote subscription management platform at least includes a processor and a storage medium.

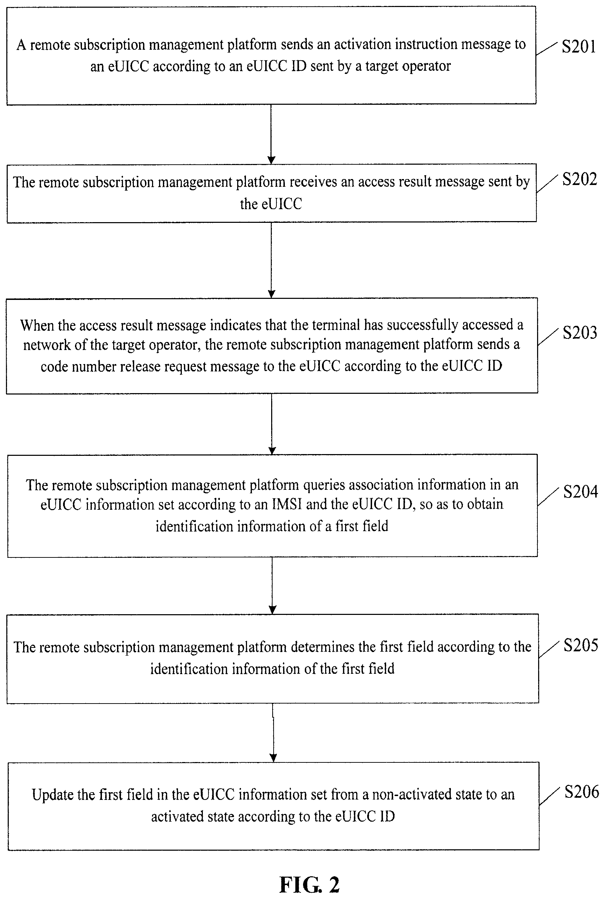

FIG. 2 is a flowchart of a method for activating an eUICC according to a second embodiment of the invention. As shown in FIG. 2, the method includes steps as follows.

In step S201, the remote subscription management platform sends an activation instruction message to an eUICC according to an eUICC ID sent by a target operator.

In step S202, the remote subscription management platform receives an access result message sent by the eUICC.

Here, the access result message includes the eUICC ID and identification information of the target operator, the access result message being used to indicate whether a terminal corresponding to the eUICC has successfully accessed a network of the target operator.

In step S203, when the access result message indicates that the terminal gas successfully accessed the network of the target operator, the remote subscription management platform sends a code number release request message to the eUICC according to the eUICC ID.

Here, the code number release request message is configured to trigger the eUICC to release the temporary code number of the target operator.

In step S204, the remote subscription management platform queries association information in an eUICC information set according to an IMSI and the eUICC ID, so as to obtain identification information of a first field.

Here, the first field is configured to describe a state of a profile of the target operator, the state of the profile including an activated state and a non-activated state.

In step S205, the remote subscription management platform determines the first field according to the identification information of the first field.

In step S206, the first field in the eUICC information set is updated from a non-activated state to an activated state according to the eUICC ID.

In the embodiment of the invention, the method further includes the steps as follows.

In step S207, the remote subscription management platform receives a successful activation message sent by the eUICC, and updates a second field in the eUICC information set from an activated state to a non-activated state according to the eUICC ID based on the successful activation message.

Here, the second field is configured to describe a state of a profile of a current operator.

Here, the remote subscription management platform may update only the first field, or may update both the first field and the second field at the same time. When the eUICC is activated for the first time, there is no profile of the current operator is present on the eUICC. Therefore, the remote subscription management platform only needs to update the first field. When the eUICC is not activated for the first time, the profile of the current operator is present on the eUICC. Therefore, the remote subscription management platform needs to update both the first field and the second field at the same time. It is important to note that a manner for updating the second field is the same as that for updating the first field.

In the embodiment of the invention, the method further includes the steps as follows.

In step S208, the remote subscription management platform sends an activation result message to the target operator and/or the current operator based on the successful activation message, the activation result message carrying the eUICC ID and the IMSI.

In the embodiment of the invention, the method further includes the steps as follows.

In step S209, the remote subscription management platform receives a deactivation request message sent by the target operator.

Here, the deactivation request message carries the IMSI corresponding to the eUICC and the eUICC ID.

In step S210, the remote subscription management platform sends a deactivation instruction message to the eUICC according to the eUICC ID, the deactivation instruction message carrying the IMSI.

Here, the deactivation instruction message is configured to instruct the eUICC to deactivate the profile of the target operator by using the IMSI.

In step S211, the remote subscription management platform receives a deactivation result message sent by the eUICC.

Here, the deactivation result message includes the eUICC ID and the identification information of the target operator, the deactivation result message being configured to indicate whether the profile of the target operator has been successfully deactivated.

In step S212, when the deactivation result message indicates that the profile has been successfully deactivated, the remote subscription management platform updates the first field in the eUICC information set from the activated state to the non-activated state according to the eUICC ID.

Here, a deactivation flow is actually provided in steps S209 to S212, and will be described in the following third example in detail.

### First Example

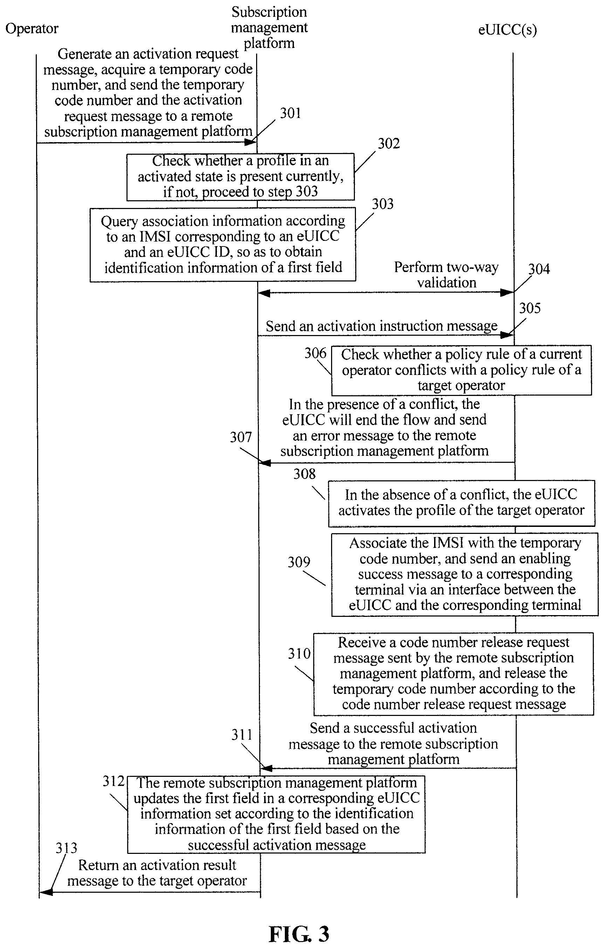

On the basis of the foregoing embodiments, an embodiment of the invention provides a method for activating an eUICC. In the embodiment of the invention, a situation (the first situation, the second situation will be introduced in the following second example) in which an eUICC is activated for the first time will be described. In other words, a flow for activating a profile between an operator and a remote subscription management platform provided in the embodiment of the invention is used for a profile that has been downloaded and installed on the eUICC. The activation flow may be initiated by an operator to which a user or a profile to be activated pertains. FIG. 3 is a flowchart of a method for activating an eUICC according to a first example of the invention. As shown in FIG. 3, the activation flow includes steps as follows.

In step 301, an operator sends an activation request message to a remote subscription management platform, acquires a temporary code number, and sends the temporary code number to the remote subscription management platform.

Here, the activation request message carries an IMSI corresponding to an eUICC and an eUICC ID. The operator generates the activation request message according to the IMSI and the eUICC ID, and the operator acquires a temporary code number corresponding to the IMSI, and sends the activation request message and the temporary code number to the remote subscription management platform.

Here, the operation that an operator sends an activation request message to a remote subscription management platform may be actively initiated or passively initiated. The active initiation means that the operator sends the activation request message to the remote subscription management platform when it determines that it is necessary to initiate the activation request message The passive initiation means that the operator receives a first activation request message sent by a user, and then the operator sends the activation request message to the remote subscription management platform according to the first activation request message. The first activation request message at least carries the IMSI corresponding to the eUICC and the eUICC ID, and a content of the first activation request message may be consistent with or different from a content of the activation request message in step 301. When the content of the first activation request message is consistent with the content of the activation request message in step 301, the operator may transparently transmit the first activation request message to the remote subscription management platform directly after receiving the first activation request message. When the content of the first activation request message is inconsistent with the content of the activation request message in step 301, the operator will make some adaptive modifications to the first activation request message and obtain the activation request message in step 301.

Here, acquiring a temporary code number in step 301 includes: acquiring, by the operator, a temporary code number from temporary code numbers stored by the operator itself, and matching, by the operator, the acquired temporary code number to an IMSI, this match referring to an establishment of an association between the temporary code number and the IMSI.

In step 302, the remote subscription management platform checks whether a profile in an activated state is present currently. If not, step 303 is executed.

Here, it is important to note that if a profile in an activated state is present currently, it is the second situation in the second example and will be described in the following second example.

In step 303, the remote subscription management platform queries association information according to the IMSI corresponding to the eUICC and the eUICC ID, so as to obtain identification information of a first field.

Here, the first field is configured to describe a state of a profile of a target operator, the state of the profile including an activated state and a non-activated state.

Here, the association information may be located in a corresponding eUICC information set, the eUICC information set storing almost all pieces of information about the eUICC. The association information is configured to indicate a correspondence among the IMSI, the eUICC ID and the identification information of the first field. The correspondence in the association information may be a one-to-one mapping or may be a many-to-one or one-to-many mapping. In a specific implementation process, the association information may be implemented by using a list, that is, the correspondence among the IMSI, the eUICC ID and the identification information of the first field is implemented by using the list. Therefore, the remote subscription management platform queries the list according to the IMSI corresponding to the eUICC and the eUICC ID, so as to obtain the identification information of the first field.

In step 304, two-way validation is performed between the remote subscription management platform and the eUICC.

In step 305, the remote subscription management platform sends an activation instruction message to the eUICC.

Here, the activation instruction message is configured to instruct the eUICC to activate a profile of a target operator, and after the eUICC receives the activation instruction message, the eUICC executes the activation flow for the profile of the target operator.

In step 306, the eUICC checks whether a policy rule of a current operator conflicts with a policy rule of the target operator.

Here, the current operator in step 306 refers to an operator corresponding to the profile currently in the activated state. Correspondingly, the policy rule of the current operator refers to a policy rule in the profile of the current operator. The policy rule of the target operator refers to a policy rule in the profile of the target operator.

Here, the eUICC acquires the profile of the target operator, and then acquires the policy rule of the target operator from the profile of the target operator. Then, the eUICC checks the policy rule of the current operator and the policy rule of the target operator to obtain a check result, the check result being configured to indicate whether the policy rule of the current operator conflicts with the policy rule of the target operator.

Here, the policy rule is a policy or rule used to indicate switching between operators.

In step 307, if the policy rules conflict with each other in step 306, the eUICC will end the flow and send an error message to the remote subscription management platform.

Here, the error message is configured to indicate that the policy rule of the current operator conflicts with the policy rule of the target operator.

In step 308, if the policy rules do not conflict with each other in step 306, the eUICC activates the profile of the target operator.

In step 309, the eUICC associates the IMSI with the temporary code number, and sends an enabling success message to a corresponding terminal via an interface between the eUICC and the corresponding terminal.

Here, the eUICC receives the temporary code number sent by the remote subscription management platform, and then the eUICC associates the IMSI with the temporary code number.

Here, the enabling success message includes the temporary code number, the terminal analyzes the enabling success message, and then the terminal accesses a network of the target operator by using the IMSI and the temporary code number. When the terminal successfully accesses the network of the target operator, the terminal sends a successful access message to the remote subscription management platform, the successful access message being configured to indicate that the terminal has successfully accessed the network of the target operator. In the present embodiment, only successful access of the terminal to the network of the target operator is taken as an example. In other embodiments of the invention, the method may further include the following steps: when the terminal has not successfully accessed the network of the target operator, the terminal sends an unsuccessful access message to the remote subscription management platform, the unsuccessful access message being configured to indicate that the terminal fails to successfully access the network of the target operator. Herein, both the successful access message and the unsuccessful access message belong to the access result message, the access result message being configured to indicate whether the terminal has successfully accessed the network of the target operator.

In step 310, the eUICC receives a code number release request message sent by the remote subscription management platform, and releases the temporary code number according to the code number release request message.

Here, the code number release request message includes the temporary code number, and the code number release request message is sent by the remote subscription management platform after receiving the successful access message sent by the eUICC.

Here, after receiving the successful access message sent by the eUICC, the remote subscription management platform will send the code number release request message to the eUICC. In other embodiments, the remote subscription management platform may receive the access result message sent by the eUICC, and when the access result message indicates that the terminal has successfully accessed the network of the target operator, the remote subscription management platform will send the code number release request message to the eUICC.

From the implementation flow in the present embodiment, it can be seen that in an activation process, an operator allocates a temporary code number to an eUICC, and after activation is completed, the eUICC will release the temporary code number associated with an IMSI on the basis of a request from a remote subscription management platform. Thus, it is unnecessary for the operator to store the temporary code number associated with the IMSI for the eUICC for a long time, thereby avoiding occupancy of a system space of an operator. Moreover, because the temporary code number is released in time, the temporary code number can be dynamically cycled, thereby avoiding waste of a temporary code number resource. It is clear that the temporary code number in the technical solution provided by the embodiment of the invention actually is a dynamic temporary code number.

In step 311, the eUICC sends a successful activation message to the remote subscription management platform.

Here, the successful activation message is configured to indicate that the profile of the target operator has been successfully activated. The successful activation message is one of an activation result message, and the activation result message is configured to indicate whether the profile of the target operator has been successfully activated. The activation result message includes the successful activation message and an unsuccessful activation message, and the unsuccessful activation message is configured to indicate that the profile of the target operator was not successfully activated.

In step 312, the remote subscription management platform updates the first field in the corresponding eUICC information set according to the identification information of the first field based on the successful activation message.

Here, the update of the first field refers to: the first field is updated from a non-activated state to an activated state.

In step 313, the remote subscription management platform returns an activation result message to the target operator.

Here, the activation result message contains the IMSI and the eUICC ID corresponding to the profile of the operator.

After the flow is executed, the profile of the target operator is in the activated state on the eUICC, and the corresponding field in the eUICC information set in the remote subscription management platform is updated (in this situation, an item is added).

It is necessary to satisfy the following conditions before the flow is executed.
A. The profile of the target operator is in a non-activated state on the eUICC, and none of profiles of operators is in an activated state on the eUICC.
B. Subscription information associated with the profile of the target operator has been activated in an operator network.
C. The IMSI of the eUICC, the ID of the remote subscription management platform in charge of managing the profile of the target operator and the eUICC ID configured by the target operator are all known to the operator.

### Second Example

On the basis of the foregoing embodiments, an embodiment of the invention provides a method for activating an eUICC. In the embodiment of the invention, a situation (second situation) in which a profile in an activated state is present on a UICC will be described, this is a switch actually, that is, a profile of a current operator is switched from an activated state to a non-activated state, and a profile of a target operator is switched from a non-activated state to an activated state. In other words, the activation method provided in the embodiment of the invention enables an operator of a terminal to be changed. For example, an original operator is A, that is, an operator currently serving is an operator A, and a target operator is an operator B, the operator currently serving will be changed from the operator A to the operator B by executing the method provided in the embodiment of the invention.

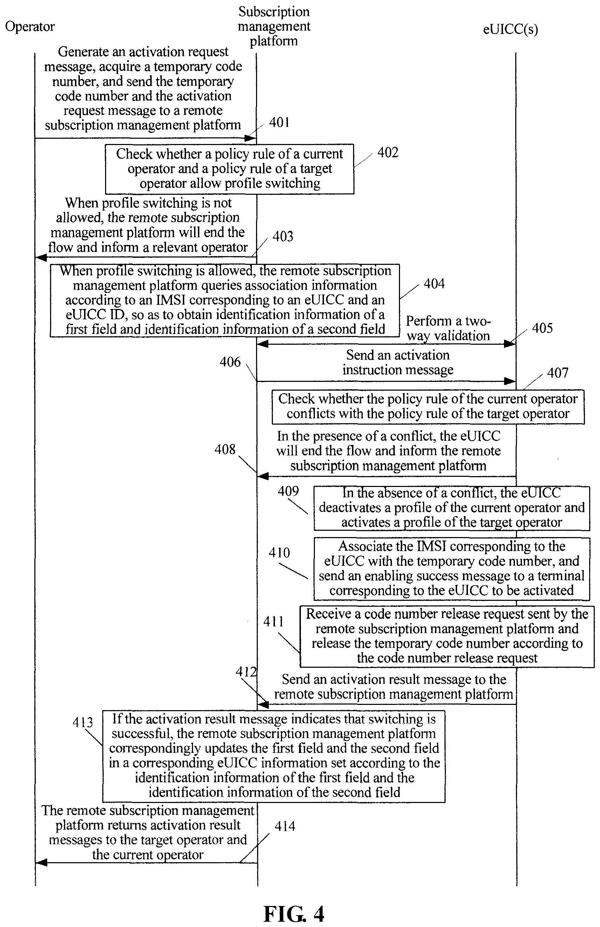

A flow for activating a profile between an operator and a remote subscription management platform provided in the embodiment of the invention is used to activate a profile that has been downloaded and installed on an eUICC previously. The activation flow may be initiated by an operator to which a user or a profile to be activated pertains. FIG. 4 is a flowchart of a method for activating an eUICC according to a second example of the invention. As shown in FIG. 4, the activation flow includes steps as follows.

In step 401, an operator sends an activation request message to a remote subscription management platform, acquires a temporary code number, and sends the temporary code number to the remote subscription management platform.

Here, the activation request message carries an IMSI corresponding to an eUICC and an eUICC ID. The operator generates the activation request message according to the IMSI and the eUICC ID, and the operator acquires the temporary code number corresponding to the IMSI, and sends the activation request message and the temporary code number to the remote subscription management platform.

Here, the operation that an operator sends an activation request message to a remote subscription management platform may be actively initiated or passively initiated. The active initiation means that the operator sends the activation request message to the remote subscription management platform when it determines that it is necessary to initiate the activation request message. The passive initiation means that the operator receives a first activation request message sent by a user, and then the operator sends the activation request message to the remote subscription management platform according to the first activation request message. The first activation request message at least carries the IMSI corresponding to the eUICC and the eUICC ID, and a content of the first activation request message may be consistent with or different from a content of the activation request message in step 401. When the content of the first activation request message is consistent with the content of the activation request message in step 401, the operator may transparently transmit the first activation request message to the remote subscription management platform after receiving the first activation request message. When the content of the first activation request message is inconsistent with the content of the activation request message in step 401, the operator will make some adaptive modifications to the first activation request message and obtains the activation request message in step 401.

Here, acquiring a temporary code number in step 401 includes: acquiring, by the operator, a temporary code number from temporary code numbers stored by the operator itself, and matching, by the operator, the temporary code number to an IMSI, this match referring to an establishment of an association between the temporary code number and the IMSI.

In step 402, the remote subscription management platform checks whether a policy rule of a current operator and a policy rule of a target operator allow profile switching.

Here, the current operator in step 402 refers to an operator corresponding to the profile currently in the activated state. Correspondingly, the policy rule of the current operator refers to a policy rule in the profile of the current operator. The policy rule of the target operator refers to a policy rule in the profile of the target operator.

Here, the remote subscription management platform receives the activation request message sent by the operator, and analyzes the IMSI corresponding to the eUICC and the eUICC ID carring in the activation request message. Then, the remote subscription management platform acquires the profile of the target operator according to the eUICC ID and the IMSI corresponding to the eUICC, and then acquires the policy rule of the target operator from the profile of the target operator. Then, the remote subscription management platform checks the policy rule of the current operator and the policy rule of the target operator to obtain a check result, the check result being configured to indicate whether the policy rule of the current operator and the policy rule of the target operator allow profile switching. When the check result indicates that the policy rule of the current operator and the policy rule of the target operator allow profile switching, the remote subscription management platform may switch the current operator to the target operator. When the check result indicates that the policy rule of the current operator and the policy rule of the target operator do not allow profile switching, the remote subscription management platform will not be able to switch the current operator to the target operator.

Here, the policy rule is a policy or rule used to indicate switching between operators. Those skilled in the art may set the policy rule according to practical situations. The policy rule is illustrated below. For example, operators in a certain region include five operators namely an operator A1, an operator A2, an operator A3, an operator A4 and an operator A5. Policy rules of the operator A1, the operator A2 and the operator A4 are taken as an example. Herein, the policy rule of the operator A1 is: the operator A1 may be switched to the operator A4, and the operator A1 cannot be switched to the operator A2, the operator A3 or the operator A5. The policy rule of the operator A2 is: the operator A2 may be switched to the operator A1 or the operator A3, and the operator A2 cannot be switched to the operator A4 or the operator A5. The policy rule of the operator A4 is: the operator A4 may be switched to any operator, that is, the operator A4 may be switched to the operator A1, the operator A2, the operator A3 or the operator A5.

If a current operator is the operator A1 and a target operator is the operator A4, it is indicated that the current operator A1 may be switched to the operator A4 according to the policy rule of the current operator A1 and the policy rule of the target operator A4. If a current operator is the operator A1 and a target operator is the operator A2, it is indicated that the current operator A1 cannot be switched to the operator A2 according to the policy rule of the current operator A1 and the policy rule of the target operator A2.

In step 403, if the policy rule of the current operator and the policy rule of the target operator do not allow profile switching in step 402, the remote subscription management platform will end the flow and inform a relevant operator.

Here, the relevant operator at least includes the current operator. When the policy rule of the current operator and the policy rule of the target operator do not allow profile switching, it is indicated that the policy rule of the current operator and the policy rule of the target operator conflict with each other.

In step 404, if the policy rule of the current operator and the policy rule of the target operator allow profile switching in step 402, the remote subscription management platform queries association information according to the IMSI corresponding to the eUICC and the eUICC ID, so as to obtain identification information of a first field and identification information of a second field.

Here, the first field is configured to describe a state of the profile of the target operator, the second field is configured to describe a state of the profile of the current operator, and the state of the profile includes an activated state and a non-activated state.

Here, the association information may be located in a corresponding eUICC information set, and the eUICC information set stores almost all pieces of information about the eUICC. The association information is configured to indicate a correspondence among the IMSI, the eUICC ID, the identification information of the first field and the identification information of the second field, the correspondence in the association information may be a one-to-one mapping or may be a many-to-one or one-to-many mapping. In a specific implementation process, the association information may be implemented by using a list, that is, the correspondence among the IMSI, the eUICC ID, the identification information of the first field and the identification information of the second field is implemented by using the list. Therefore, the remote subscription management platform queries the list according to the IMSI corresponding to the eUICC and the eUICC ID, so as to obtain the identification information of the first field and the identification information of the second field.

In step 405, necessary two-way validation is performed between the remote subscription management platform and the eUICC.

In step 406, the remote subscription management platform sends an activation instruction message to the eUICC.

Here, the activation instruction message is configured to instruct the eUICC to activate the profile of the target operator, and after the eUICC receives the activation instruction message, the eUICC executes the flow for activating the profile of the target operator.

In step 407, the eUICC checks whether the policy rule of the current operator conflicts with the policy rule of the target operator.

In step 408, if the policy rules conflict with each other in step 407, the eUICC will end the flow and inform the remote subscription management platform.

In step 409, if the policy rules do not conflict with each other in step 407, the eUICC deactivates the profile of the current operator and activates the profile of the target operator.

In step 410, the eUICC associates the IMSI corresponding to the eUICC with the temporary code number, and sends an enabling success message to a terminal corresponding to the eUICC to be activated.

Here, the eUICC receives the temporary code number sent by the remote subscription management platform, and then associates the IMSI with the temporary code number. The enabling success message includes the temporary code number, such that the terminal accesses a network of the target operator by using the IMSI and the temporary code number. After receiving the enabling success message, the terminal accesses the network of the target operator by using the IMSI and the temporary code number, and after the access is completed, the terminal sends an access result message to the eUICC. The access result message includes a successful access message and an unsuccessful access message. The access result message is configured to indicate whether the terminal has successfully accessed the network of the target operator. The successful access message is configured to indicate that the terminal has successfully accessed the network of the target operator, and the unsuccessful access message is configured to indicate that the terminal fails to successfully access the network of the target operator. In the present embodiment, successful access is taken as an example, that is, the eUICC will receive the successful access message from the terminal. In other embodiments of the invention, the eUICC may also receive the unsuccessful access message from the terminal, the eUICC returns the unsuccessful access message to the remote subscription management platform, and then the flow is ended.

In step 411, the eUICC receives a code number release request message sent by the remote subscription management platform, and releases the temporary code number according to the code number release request message.

Here, the code number release request message includes the temporary code number, and the code number release request message is sent by the remote subscription management platform after receiving the successful access message sent by the eUICC.

In step 412, the eUICC sends an activation result message to the remote subscription management platform.

Here, the activation result message is configured to indicate whether the profile of the current operator is successfully deactivated and whether the profile of the target operator is successfully activated. It is important to note that the activation result message in step 412 is more like a result message of a switching operation. This switching is similar to switching from the profile of the current operator to the profile of the target operator.

In step 413, if the activation result message indicates that switching is successful, the remote subscription management platform updates the first field and the second field in the corresponding eUICC information set according to the identification information of the first field and the identification information of the second field.

Here, the successful switching refers to that the current operator has been successfully deactivated and the profile of the target operator has been activated. When the activation result message indicates that the switching is successful, it is equivalent to that the eUICC sends the successful activation message to the remote subscription management platform. Updating the first field includes: updating the first field from a non-activated state to an activated state. Updating the second field includes: updating the second field from an activated state to a non-activated state.

Here, if the target operator is A4 and the current operator is A1, before step 413, the state of the profile of the current operator A1 stored on the remote subscription management platform is the activated state, and the state of the profile of the target operator A4 stored on the remote subscription management platform is the non-activated state. After the activation result message indicates that the switching is successful, that is, the current operator has been switched to the target operator, it is necessary to change the profile of the current operator A1 from the activated state to the non-activated state, and change the profile of the target operator A4 from the non-activated state to the activated state in step 413.

In step 414, the remote subscription management platform returns activation result messages to the target operator and the current operator.

Here, these activation result messages include the IMSI and the eUICC ID corresponding to the profiles of the operators.

After the flow is executed, the profile of the target operator is in the activated state on the eUICC, the profile of the operator in the activated state previously is in the deactivated state, and the fields in the corresponding eUICC information set in the remote subscription management platform are updated.

Herein, it is necessary to satisfy following conditions before the flow is executed.
A. The profile of the target operator is in a non-activated state on the eUICC, and the profile of the current operator which is in an activated state is present on the eUICC.
B. Subscription information associated with the profile of the target operator has been activated in an operator network.
C. The IMSI of the eUICC, the ID of the remote subscription management platform in charge of managing the profile of the target operator and the eUICC ID corresponding to the profile of the target operator are all known to the operator.

### Third Example

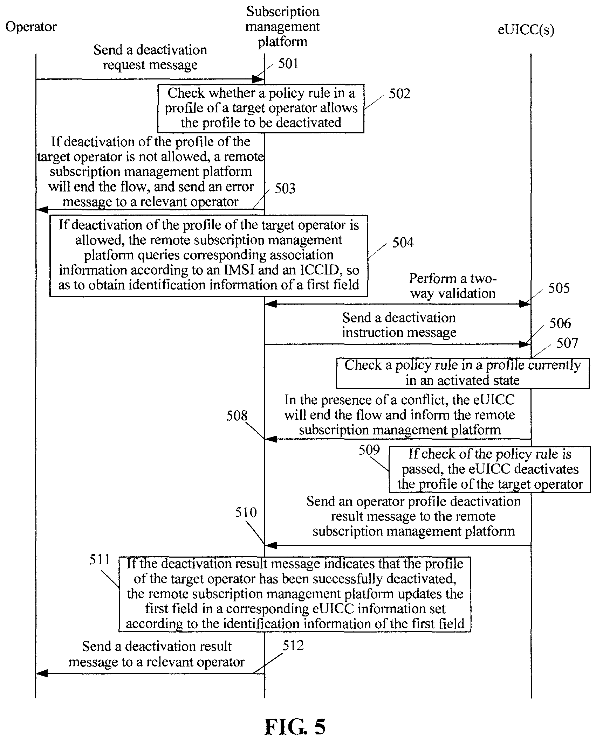

On the basis of the foregoing embodiments, an embodiment of the invention provides a method for deactivating an eUICC. In the method, a profile of a target operator is in an activated state on the eUICC currently. FIG. 5 is a flowchart of a method for deactivating an eUICC according to the third example of the invention. As shown in FIG. 5, the method includes steps as follows.

In step 501, an operator sends a deactivation request message to a remote subscription management platform.

Here, the deactivation request message carries an IMSI corresponding to an eUICC and an eUICC ID.

In step 502, the remote subscription management platform checks whether a policy rule in a profile of a target operator allows the profile of the target operator to be deactivated.

In step 503, if deactivation of the profile of the target operator is not allowed in step 502, the remote subscription management platform will end the flow, and send an error message to a relevant operator.

Here, the error message is configured to indicate that an error occurs in a process of deactivating the profile of the target operator, and the error message may also carry a type of the error.

In step 504, if deactivation of the profile of the target operator is allowed in step 502, the remote subscription management platform queries corresponding association information according to the IMSI and the eUICC ID, so as to obtain identification information of a first field.

In step 505, two-way validation is performed between the remote subscription management platform and the eUICC.

In step 506, the remote subscription management platform sends a deactivation instruction message to the eUICC.

Here, the deactivation instruction message is configured to instruct the eUICC to deactivate the profile of the target operator, and after the eUICC receives the deactivation instruction message, the eUICC executes a deactivation flow for the profile of the target operator.

In step 507, the eUICC checks a policy rule in a profile currently in an activated state.

In step 508, if check of the policy rule in step 507 conflicts, the eUICC will end the flow and inform the remote subscription management platform.

In step 509, if check of the policy rule in step 507 is passed, the eUICC deactivates the profile of the target operator.

In step 510, the eUICC sends a deactivation result message to the remote subscription management platform.

Here, the deactivation result message is configured to indicate whether the profile of the target operator has been successfully deactivated.

In step 511, if the deactivation result message indicates that the profile of the target operator has been successfully deactivated, the remote subscription management platform updates the first field in a corresponding eUICC information set according to the identification information of the first field.

Here, updating the first field refers to: updating the first field from an activated state to a non-activated state.

In step 512, the remote subscription management platform sends the deactivation result message to the relevant operator.

Here, the deactivation result message carries the IMSI and the eUICC ID corresponding to the profile of the operator.

In the embodiment of the invention, after the flow is executed, the profile of the target operator is in a non-activated state on the eUICC, a profile of other operator is in an activated state, and a field in the corresponding eUICC information set in the remote subscription management platform is updated.

### Fourth Example

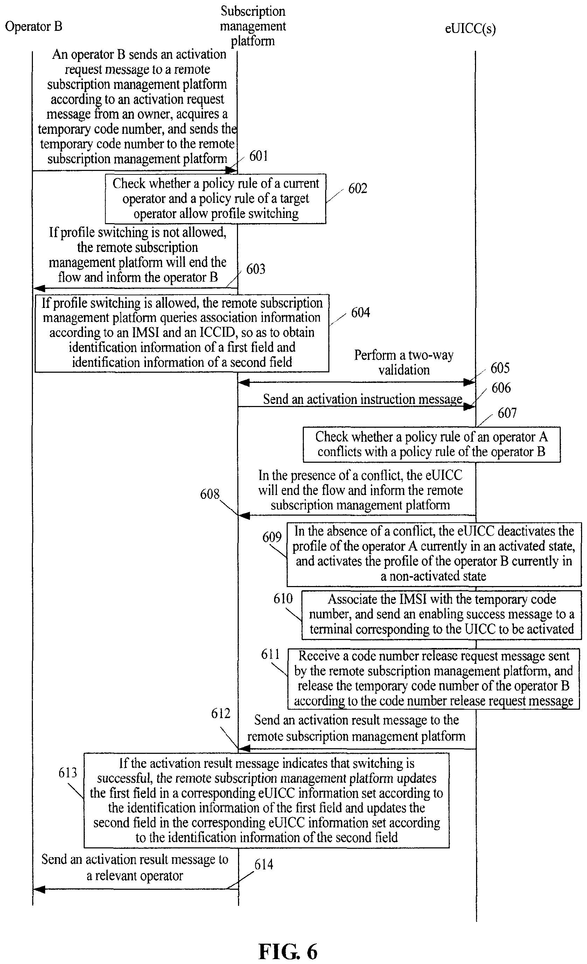

In a case that a vehicle into which an eUICC is embedded experiments with services provided by an operator A currently, and an owner of the vehicle is intended to stop experimenting with the services provided by the operator A and in turn to experiment with services provided by an operator B, it is necessary to deactivate a profile of the operator A and to activate a profile of the operator B. FIG. 6 is a flowchart of a method for activating an eUICC according to the fourth example of the invention. As shown in FIG. 6, the method includes steps as follows.

In step 601, the operator B sends an activation request message to a remote subscription management platform according to an activation request message from the owner, acquires a temporary code number, and sends the temporary code number to the remote subscription management platform.

Here, the activation request message carries an IMSI corresponding to the eUICC and an eUICC ID.

In step 602, the remote subscription management platform checks whether a policy rule of a current operator and a policy rule of a target operator allow profile switching.

In step 603, if profile switching is not allowed in step 602, the remote subscription management platform will end the flow and inform the operator B.

In step 604, if profile switching is allowed in step 602, the remote subscription management platform queries association information according to the IMSI and the eUICC ID, so as to obtain identification information of a first field and identification information of a second field.

Here, the first field is configured to describe a state of the profile of the operator A, the second field is configured to describe a state of the profile of the operator B, and the state of the profile includes an activated state and a non-activated state.

In step 605, two-way validation is performed between the remote subscription management platform and the eUICC.

In step 606, the remote subscription management platform sends an activation instruction message to the eUICC.

Here, the activation instruction message is configured to instruct the eUICC to deactivate the profile of the operator A and activate the profile of the operator B, such that the eUICC executes an activation flow for the profile of the operator B.

In step 607, the eUICC checks whether a policy rule of the operator A conflicts with a policy rule of the operator B.

In step 608, if the policy rules conflict with each other in step 607, the eUICC will end the flow and inform the remote subscription management platform.

In step 609, if the policy rules do not conflict with each other in step 607, the eUICC deactivates the profile of the operator A which is currently in an activated state, and activates the profile of the operator B which is currently in a non-activated state.

In step 610, the eUICC associates the IMSI with the temporary code number, and sends an enabling success message to a terminal embedded with the eUICC to be activated.

Here, the eUICC receives the temporary code number sent by the remote subscription management platform, and then associates the temporary code number with the IMSI.

Here, the enabling success message includes the temporary code number, and the enabling success message is configured to enable the terminal to access a network of the operator B by using the IMSI and the temporary code number.

In step 611, the eUICC receives a code number release request message sent by the remote subscription management platform, and releases the temporary code number of the operator B according to the code number release request message.

Here, the code number release request message includes the temporary code number of the operator B, and the code number release request message is sent by the remote subscription management platform after receiving a successful access message sent by the eUICC.

In step 612, the eUICC sends an activation result message to the remote subscription management platform.

Here, the activation result message is configured to indicate whether the profile of the target operator is successfully activated and whether the profile of the current operator is successfully deactivated.

In step 613, if the activation result message indicates that switching is successful, the remote subscription management platform updates the first field in the corresponding eUICC information set according to the identification information of the first field and updates the second field in the corresponding eUICC information set according to the identification information of the second field.

Here, updating the first field in step 613 includes: updating the first field from a non-activated state to an activated state. Updating the second field in step 613 includes: updating the second field from an original activated state to a non-activated state.

In step 614, the remote subscription management platform returns activation result messages to the operator B and the operator A.

Here, the activation result messages include the IMSI and the eUICC ID corresponding to the profiles of the operators.

After the flow provided in the example of the invention is executed, the profile of the operator B is in an activated state on the eUICC, the profile of the operator A is in a deactivated state, and a field in the corresponding eUICC information set in the remote subscription management platform is updated.

### Third Embodiment

On the basis of the foregoing embodiments, an embodiment of the invention also provides a method for activating an eUICC. The method is applied to an eUICC. Functions implemented by the method for activating the eUICC may be implemented by calling program codes via a processor in the eUICC, and certainly, the program codes may be stored in a computer storage medium. It is clear that the eUICC at least includes a processor and a storage medium.

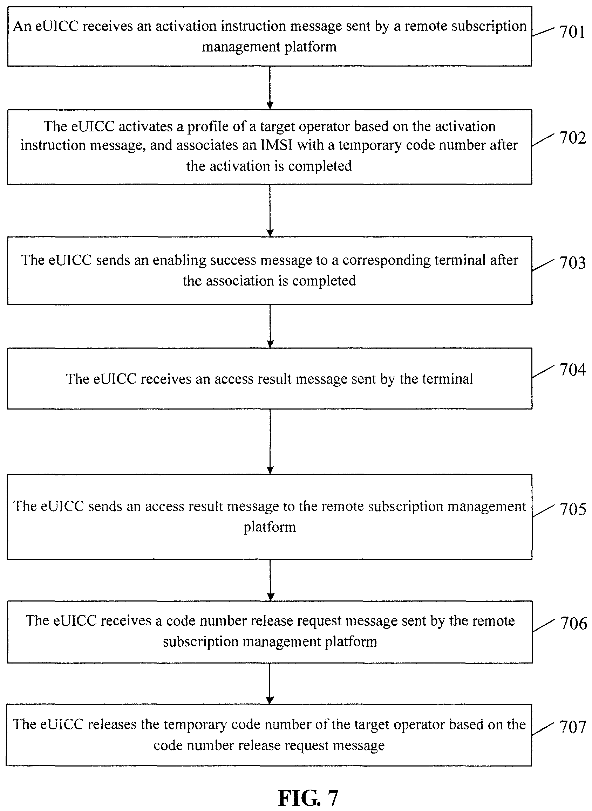

FIG. 7 is a flowchart of a method for activating an eUICC according to the third embodiment of the invention. As shown in FIG. 7, the method includes steps as follows.

In step 701, an eUICC receives an activation instruction message sent by a remote subscription management platform.

Here, the activation instruction message carries an IMSI and a temporary code number corresponding to the IMSI sent by a target operator.

In step 702, the eUICC activates a profile of the target operator based on the activation instruction message, and associates the IMSI with the temporary code number after the activation is completed.

In step 703, the eUICC sends an enabling success message to a corresponding terminal after the association is completed.

Here, the enabling success message carries the temporary code number, and the enabling success message is configured to trigger the terminal to access a network of the target operator by using the temporary code number.

In step 704, the eUICC receives an access result message sent by the terminal.

Here, the access result message is configured to indicate whether the terminal has successfully accessed the network of the target operator.

In step 705, the eUICC sends an access result message to the remote subscription management platform.

Here, the access result message includes the eUICC ID and identification information of the target operator, and the access result message is configured to indicate whether the terminal has successfully accessed the network of the target operator.

Here, when the access result message indicates that the terminal has successfully accessed the network of the target operator, the remote subscription management platform sends a code number release request message to the eUICC according to the eUICC ID, the code number release request message being configured to trigger the eUICC to release the temporary code number of the target operator.

In step 706, the eUICC receives the code number release request message sent by the remote subscription management platform.

Here, the code number release request message is configured to trigger the eUICC to release the temporary code number of the target operator.

In step 707, the eUICC releases the temporary code number of the target operator based on the code number release request message.

From the implementation flow in the present embodiment, it can be seen that in an activation process, an operator allocates a temporary code number to an eUICC, and after activation is completed, the eUICC will release the temporary code number associated with an IMSI on the basis of a request from a remote subscription management platform. Thus, it is unnecessary for the operator to store the temporary code number associated with the IMSI for the eUICC for a long time, thereby avoiding occupancy of a system space of an operator. Moreover, because the temporary code number is released in time, the temporary code number can be dynamically cycled, thereby avoiding waste of a temporary code number resource. It is clear that the temporary code number in the technical solution provided in the embodiment of the invention actually is a dynamic temporary code number.

### Fourth Embodiment

On the basis of the foregoing embodiments, an embodiment of the invention provides an internet-of-things system. The internet-of-things system includes a remote subscription management platform and an eUICC. All units included in the remote subscription management platform such as a first sending unit, a first receiving unit and a second sending unit and all modules included in all the units may be implemented by a processor in the remote subscription management platform. All units included in the eUICC such as a sixth receiving unit, an association unit and a sixth sending unit and all modules included in all the units may be implemented by a processor in the eUICC. In a specific implementation process, functions implemented by the processors may also be implemented by specific logic circuits. In a specific embodiment process, the processors may be a Central Processing Unit (CPU), a Micro-Processor Unit (MPU), a Digital Signal Processor (DSP) or a Field-Programmable Gate Array (FPGA).

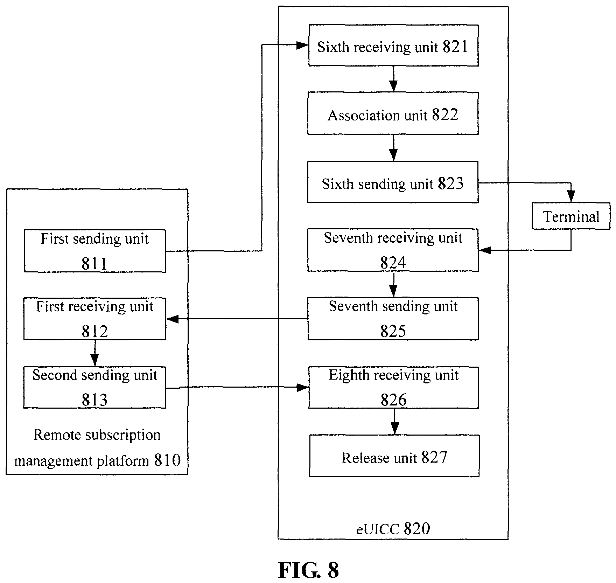

FIG. 8 is a schematic diagram showing a composition of an internet-of-things system according to the fourth embodiment of the invention. As shown in FIG. 8, the system includes a remote subscription management platform and an eUICC. The remote subscription management platform 810 includes a first sending unit 811, a first receiving unit 812 and a second sending unit 813.

The first sending unit 811 is configured to send an activation instruction message to an eUICC according to an eUICC ID sent by a target operator, the activation instruction message carrying a temporary code number and an IMSI sent by the target operator, the activation instruction message being configured to instruct the eUICC to activate a profile of the target operator by using the temporary code number and the IMSI.

The first receiving unit 812 is configured to receive an access result message sent by the eUICC, the access result message including the eUICC ID and identification information of the target operator, the access result message being configured to indicate whether a terminal corresponding to the eUICC has successfully accessed a network of the target operator.

The second sending unit 813 is configured to send, when the access result message indicates that the terminal has successfully accessed the network of the target operator, a code number release request message to the eUICC according to the eUICC ID, the code number release request message being configured to trigger the eUICC to release the temporary code number of the target operator.

The eUICC 820 includes a sixth receiving unit 821, an association unit 822, a sixth sending unit 823, a seventh receiving unit 824, a seventh sending unit 825, an eighth receiving unit 826 and a release unit 827.

The sixth receiving unit 821 is configured to receive the activation instruction message sent by the remote subscription management platform, the activation instruction message carrying the IMSI and the temporary code number corresponding to the IMSI sent by the target operator.

The association unit 822 is configured to activate the profile of the target operator based on the activation instruction message, and associate, after the activation is completed, the IMSI with the temporary code number.

The sixth sending unit 823 is configured to send, after the association is completed, an enabling success message to a corresponding terminal, the enabling success message carrying the temporary code number, and the enabling success message being configured to trigger the terminal to access the network of the target operator by using the temporary code number.

The seventh receiving unit 824 is configured to receive an access result message sent by the terminal, the access result message being configured to indicate whether the terminal has successfully accessed the network of the target operator.

The seventh sending unit 825 is configured to send an access result message to the remote subscription management platform, the access result message including the eUICC ID and the identification information of the target operator.

The eighth receiving unit 826 is configured to receive the code number release request message sent by the remote subscription management platform, the code number release request message being configured to trigger the eUICC to release the temporary code number of the target operator.

The release unit 827 is configured to release the temporary code number of the target operator based on the code number release request message.

In the embodiment of the invention, the remote subscription management platform further includes a second receiving unit and a third receiving unit.

The second receiving unit is configured to receive an activation request message sent by the target operator, the activation request message carrying the IMSI corresponding to the eUICC and the eUICC ID.

The third receiving unit is configured to receive the temporary code number sent by the target operator, the temporary code number corresponding to the IMSI.

In the embodiment of the invention, the activation request message carries the identification information of the target operator, and the remote subscription management platform further includes a first judgment unit, a first determination unit and a first carrying unit.

The first judgment unit is configured to judge whether a profile in an activated state is present on the eUICC currently according to the IMSI and the eUICC ID, so as to obtain a first judgment result.

The first determination unit is configured to determine, according to the first judgment result, first identification information to be carried in the activation instruction message.

The first carrying unit is configured to carry the identification information of the target operator, the first identification information, the temporary code number and the IMSI in the activation instruction message.

In the embodiment of the invention, the first determination unit includes a first processing module and a second processing module.

The first processing module is configured to set, when the first judgment result indicates that there is no profile in an activated state is present on the eUICC currently, the first identification information as null.

The second processing module is configured to set, when the first judgment result indicates that a profile in an activated state is present on the eUICC currently, the first identification information as identification information of a current operator, the current operator being an operator corresponding to the profile in the activated state.

In the embodiment of the invention, the remote subscription management platform further includes a first acquisition unit and a second judgment unit.

The first acquisition unit is configured to acquire, when the first judgment result indicates that a profile in an activated state is present on the eUICC currently, a policy rule of the current operator at least according to the identification information of the current operator.

Herein, the policy rule of the current operator is a rule for specifying whether switching can be performed between the current operator and other operators.

The second judgment unit is configured to judge, according to the policy rule of the current operator, whether switching from a profile of the current operator to the profile of the target operator is allowed, so as to obtain a second judgment result.

When the second judgment result indicates that switching from the profile of the current operator to the profile of the target operator is allowed, the first sending unit is triggered.

In the embodiment of the invention, the remote subscription management platform further includes a third sending unit, configured to send the second judgment result to the target operator.

In the embodiment of the invention, the remote subscription management platform further includes a first updating unit, configured to receive a successful activation message sent by the eUICC, and update, according to the eUICC ID, a first field in an eUICC information set from a non-activated state to an activated state based on the successful activation message.

Herein, the first field is configured to describe a state of the profile of the target operator, the state of the profile including the activated state and the non-activated state.

In the embodiment of the invention, the remote subscription management platform further includes a query unit and a second determination unit.

The query unit is configured to queries association information in the eUICC information set according to the IMSI and the eUICC ID, so as to obtain identification information of the first field.

The second determination unit is configured to determine the first field according to the identification information of the first field.

In the embodiment of the invention, the remote subscription management platform further includes a second updating unit, configured to update, according to the eUICC ID, a second field in the eUICC information set from an activated state to a non-activated state based on the successful activation message.

Herein, the second field is configured to describe a state of the profile of the current operator.

In the embodiment of the invention, the remote subscription management platform further includes a fourth sending unit, configured to send an activation result message to the target operator and/or current operator based on the successful activation message, the activation result message carrying the eUICC ID and the IMSI.

In the embodiment of the invention, the remote subscription management platform further includes a fourth receiving unit, a fifth sending unit, a fifth receiving unit and a third updating unit.

The fourth receiving unit is configured to receive a deactivation request message sent by the target operator, the deactivation request message carrying the IMSI corresponding to the eUICC and the eUICC ID.

The fifth sending unit is configured to send a deactivation instruction message to the eUICC according to the eUICC ID, the deactivation instruction message carrying the IMSI, the deactivation instruction message being configured to instruct the eUICC to deactivate the profile of the target operator by using the IMSI.

The fifth receiving unit is configured to receive a deactivation result message sent by the eUICC, the deactivation result message including the eUICC ID and the identification information of the target operator, the deactivation result message being configured to indicate whether the profile of the target operator has been successfully deactivated.

The third updating unit is configured to update, when the deactivation result message indicates that the profile has been successfully deactivated, the first field in the eUICC information set from the activated state to the non-activated state according to the eUICC ID.

### Fifth Embodiment

On the basis of the foregoing embodiments, an embodiment of the invention provides an internet-of-things system. The system includes a remote subscription management platform and an eUICC. All units included in the remote subscription management platform such as a first sending unit, a first receiving unit and a second sending unit and all modules included in all the units may be implemented by a processor in the remote subscription management platform. All units included in the eUICC such as a sixth receiving unit, an association unit and a sixth sending unit and all modules included in all the units may be implemented by a processor in the eUICC.

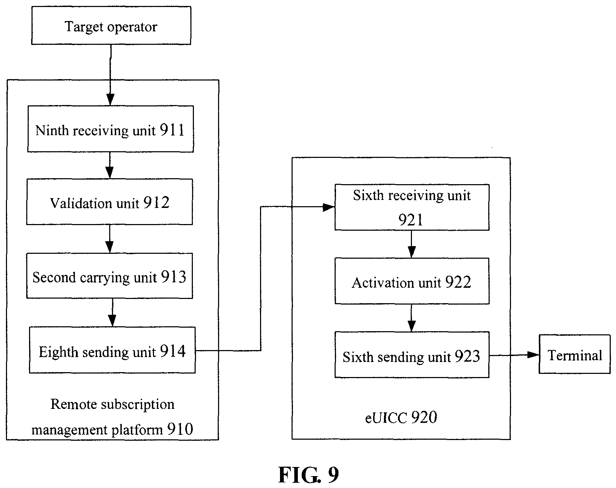

FIG. 9 is a schematic diagram showing a composition of an internet-of-things system according to the fifth embodiment of the invention. As shown in FIG. 9, the internet-of-things system includes a remote subscription management platform 910 and an eUICC 920.

The remote subscription management platform 910 includes a ninth receiving unit 911, a validation unit 912, a second carrying unit 913 and an eighth sending unit 914.

The ninth receiving unit 911 is configured to receive an activation request message sent by a target operator, the activation request message carrying an IMSI corresponding to an eUICC and an eUICC ID.

The validation unit 912 is configured to validate the eUICC according to the eUICC ID.

The second carrying unit 913 is configured to carry, after validation is passed, the eUICC ID and the IMSI in an activation instruction message.

The eighth sending unit 914 is configured to send the activation instruction message to the eUICC according to the eUICC ID, the activation instruction message being configured to instruct the eUICC to activate a profile of the target operator by using the IMSI.

The eUICC 920 includes a sixth receiving unit 921, an activation unit 922 and a sixth sending unit 923.

The sixth receiving unit 921 is configured to receive the activation instruction message sent by the remote subscription management platform, the activation instruction message carrying the IMSI and the eUICC ID sent by the target operator.

The activation unit 922 is configured to activate the profile of the target operator based on the activation instruction message.

The sixth sending unit 923 is configured to send, after activation is completed, an enabling success message to a corresponding terminal, the enabling success message carrying the IMSI, the enabling success message being configured to trigger the terminal to access a network of the target operator by using the IMSI.

In the embodiment of the invention, the activation request message further carries identification information of the target operator, and the remote subscription management platform further includes a first judgment unit and a first determination unit.

The first judgment unit is configured to judge whether a profile in an activated state is present on the eUICC currently according to the IMSI and the eUICC ID, so as to obtain a first judgment result.

The first determination unit is configured to determine, according to the first judgment result, first identification information to be carried in the activation instruction message.

Correspondingly, the second carrying unit is configured to carry the identification information of the target operator, the first identification information, the eUICC ID and the IMSI in the activation instruction message.

Here, the activation unit in the eUICC is configured to deactivate a profile of a corresponding operator according to the first identification information and activate the profile of the target operator according to the identification information of the target operator.

In the embodiment of the invention, the remote subscription management platform further includes a tenth receiving unit, configured to receive the temporary code number sent by the target operator, the temporary code number corresponding to the IMSI. Correspondingly, the second carrying unit is configured to carry the identification information of the target operator, the first identification information, the eUICC ID, the IMSI and the temporary code number in the activation instruction message.

Here, the eUICC further includes an association unit, configured to associate, after activation is completed, the IMSI with the temporary code number. The sixth sending unit 923 in the eUICC is configured to send, after association is completed, an enabling success message to a corresponding terminal, the enabling success message carrying the IMSI and the temporary code number, the enabling success message being configured to trigger the terminal to access a network of the target operator by using the IMSI and the temporary code number.

In the embodiment of the invention, the activation request message carries the temporary code number.

It is important to note that in the embodiments of the invention, if the method for activating the eUICC is implemented in a form of software function module and sold or used as an independent product, the method may also be stored in a computer-readable storage medium. Based on such understanding, the essence of the technical solutions of the embodiments of the invention or parts making contributions to the prior art may be embodied in form of software product, and the computer software product is stored in a storage medium, including a plurality of instructions used to enable computer equipment (which may be a personal computer, a server, network equipment or the like) to execute all or part of the method in each embodiment of the invention. The foregoing storage medium includes: various media capable of storing program codes such as a U disk, a mobile hard disk, a Read-Only Memory (ROM), a magnetic disk or an optical disk. Thus, the embodiment of the invention is not limited to combination of any specific hardware and software.

Correspondingly, an embodiment of the invention also provides a computer storage medium in which computer-executable instructions are stored, the computer-executable instructions being configured to execute the method for activating an eUICC in the embodiment of the invention.

Here, it is important to note that description for the above system embodiments is similar to description for the above-mentioned method embodiments. The system embodiments have a beneficial effect similar to that of the method embodiments and will not be elaborated accordingly. Technical details not disclosed in the system embodiments of the invention should be understood with reference to the description for the method embodiments, and will not be elaborated in order to save space.

It will be appreciated that "one embodiment" or "an embodiment" mentioned in the whole description means that specific features, structures or characteristics associated with an embodiment are included in at least one embodiment of the invention. Therefore, "in one embodiment" or "in an embodiment" appearing throughout the description does not necessarily refer to the same embodiment. In addition, these specific features, structures or characteristics may be combined in one or more embodiments in any suitable manner. It will be appreciated that in each embodiment of the invention, the serial number of each process does not mean an order in which each process is performed, which should be determined by functions and inherent logics thereof, and should not constitute any limitation on an implementation of the embodiments of the invention. The serial numbers of the embodiments of the invention are only used for descriptions, and do not represent the preference of the embodiments.

It is important to note that terms such as "including", "containing" or any other variants thereof are intended to cover non-exclusive inclusions, such that a process, method, article or device including a series of elements not only includes those elements, but also includes other elements that are not clearly listed, or further includes elements inherent to the process, method, article or device. In the absence of more restrictions, an element defined by a sentence "including a ..." do not exclude that additional identical elements exist in the process, method, article or device in which it is included.

In some embodiments provided by the present application, it will be appreciated that the disclosed device and method may be implemented in another manner. The device embodiments described above are merely illustrative. For example, division of the units is merely a division of logic functions, and other division manners may be adopted during practical implementation. For example, multiple units or components may be combined or integrated into another system, or some characteristics may be neglected or not executed. In addition, coupling, direct coupling or communication connection between each displayed or discussed component may be indirect coupling or communication connection, implemented through some interfaces, of the devices or the units, and may be electrical and mechanical or otherwise.

The above-mentioned units described as separate parts may or may not be physically separated, and parts displayed as units may or may not be physical units, and namely may be located in the same place, or may also be distributed to multiple network units. Part or all of the units may be selected to achieve the purpose of the solutions of the embodiment according to a practical requirement.

In addition, each function unit in each embodiment of the invention may be integrated into a processing unit, each unit may also exist independently, and two or more than two units may also be integrated into a unit. The abovementioned integrated unit may be implemented in a form of hardware, and may also be implemented in a form of hardware and software function unit.

Those of ordinary skill in the art may understand that all or some steps implementing the above-mentioned method embodiments may be completed by instructing relevant hardware via a program. The foregoing program may be stored in a computer-readable storage medium, and when the program is executed, the steps in the above-mentioned method embodiments are executed. The foregoing storage medium includes: various media capable of storing program codes such as mobile storage equipment, an ROM, a magnetic disk or an optical disk.

Or, when being implemented in a form of software function module and sold or used as an independent product, the above-mentioned integrated unit may also be stored in a computer-readable storage medium. Based on such understanding, the essence of the technical solutions of the embodiments of the invention or parts making contributions to the prior art may be embodied in form of a software product, and the computer software product is stored in a storage medium, including a plurality of instructions used to enable computer equipment (which may be a personal computer, a server, network equipment or the like) to execute all or part of the method in each embodiment of the invention. The foregoing storage medium includes: various media capable of storing program codes such as mobile storage equipment, an ROM, a magnetic disk or an optical disk.

The foregoing descriptions are merely specific embodiments of the invention, and the scope of protection of the invention is not limited to this. As will occur to any person skilled in the art, the invention is susceptible to changes or replacements within the scope of the claims. These changes or replacements should fall within the scope of protection of the invention. Therefore, the scope of protection of the invention should be determined by the scope of protection of the claims.

### INDUSTRIAL APPLICABILITY

In the embodiments of the invention, a remote subscription management platform sends an activation instruction message to an eUICC according to an eUICC ID sent by a target operator, the activation instruction message carrying a temporary code number and an IMSI sent by the target operator; the remote subscription management platform receives an access result message sent by the eUICC, the access result message including the eUICC ID and identification information of the target operator, the access result message being configured to indicate whether a terminal corresponding to the eUICC has successfully accessed a network of the target operator; and when the access result message indicates that the terminal has successfully accessed the network of the target operator, the remote subscription management platform sends a code number release request message to the eUICC according to the eUICC ID, the code number release request message being configured to trigger the eUICC to release the temporary code number of the target operator. Thus, temporary code number resources can be recovered in time, thereby improving efficiency for managing an eUICC.

## Claims

1. A method for activating an embedded Universal Integrated Circuit Card, eUICC, **characterized in that** the method comprises:
sending (S101), by a remote subscription management platform, an activation instruction message to the eUICC according to identification information of the eUICC, eUICC ID, sent by a target operator, the activation instruction message carrying a temporary code number and an International Mobile Subscriber Identification Number, IMSI, sent by the target operator, the activation instruction message being configured to instruct the eUICC to activate a profile of the target operator by using the temporary code number and the IMSI;
receiving (S102), by the remote subscription management platform, an access result message sent by the eUICC, the access result message comprising the eUICC ID and identification information of the target operator, the access result message being configured to indicate whether a terminal corresponding to the eUICC has successfully accessed a network of the target operator; and
when the access result message indicates that the terminal has successfully accessed the network of the target operator, sending (S103), by the remote subscription management platform, a code number release request message to the eUICC according to the eUICC ID, the code number release request message being configured to trigger the eUICC to release the temporary code number of the target operator.

2. The method according to claim 1, further comprising:
receiving, by the remote subscription management platform, an activation request message sent by the target operator, the activation request message carrying the IMSI corresponding to the eUICC and the eUICC ID; and
receiving, by the remote subscription management platform, the temporary code number sent by the target operator, the temporary code number corresponding to the IMSI.

3. The method according to claim 2, wherein the activation request message carries the identification information of the target operator, the method further comprising:
judging (S104), by the remote subscription management platform, whether a profile in an activated state is present on the eUICC currently according to the IMSI and the eUICC ID, so as to obtain a first judgment result;
determining (S105), by the remote subscription management platform, first identification information to be carried in the activation instruction message according to the first judgment result;
validating, by the remote subscription management platform, the eUICC; and
carrying (S106), by the remote subscription management platform, after the validation is passed, the identification information of the target operator, the first identification information, the eUICC ID, the temporary code number and the IMSI in the activation instruction message.

4. The method according to claim 3, wherein determining, by the remote subscription management platform, first identification information to be carried in the activation instruction message according to the first judgment result comprises:
when the first judgment result indicates that there is no profile in an activated state is present on the eUICC currently, setting, by the remote subscription management platform, the first identification information as null; and
when the first judgment result indicates that a profile in an activated state is present on the eUICC currently, setting, by the remote subscription management platform, the first identification information as identification information of a current operator, the current operator being an operator corresponding to the profile in the activated state.

5. The method according to claim 4, further comprising:
when the first judgment result indicates that a profile in an activated state is present on the eUICC currently, acquiring (S107), by the remote subscription management platform, a policy rule of the current operator at least according to the identification information of the current operator, the policy rule of the current operator being a rule for specifying whether switching can be performed between the current operator and other operators;
judging (S108), by the remote subscription management platform, whether switching from a profile of the current operator to the profile of the target operator is allowed according to the policy rule of the current operator, so as to obtain a second judgment result; and
when the second judgment result indicates that switching from the profile of the current operator to the profile of the target operator is allowed, sending (SI09), by the remote subscription management platform, the activation instruction message to the eUICC.

6. The method according to claim 5, further comprising: sending (S110), by the remote subscription management platform, the second judgment result to the target operator.

7. The method according to any one of claims 1 to 6, further comprising:
receiving, by the remote subscription management platform, a successful activation message sent by the eUICC; and
updating , by the remote subscription management platform, a first field in an eUICC information set from a non-activated state to an activated state according to the eUICC ID based on the successful activation message,
wherein the first field is configured to describe a state of the profile of the target operator, the state of the profile comprising the activated state and the non-activated state.

8. The method according to claim 7, further comprising:
querying (S204), by the remote subscription management platform, association information in the eUICC information set according to the IMSI and the eUICC ID, so as to obtain identification information of the first field; and
determining (S205), by the remote subscription management platform, the first field according to the identification information of the first field.

9. The method according to claim 7, further comprising:
updating (S207), by the remote subscription management platform, a second field in the eUICC information set from the activated state to the non-activated state according to the eUICC ID based on the successful activation message,
wherein the second field is configured to describe a state of the profile of the current operator.

10. The method according to claim 7, further comprising:
sending (S208), by the remote subscription management platform, an activation result message to the target operator and/or the current operator based on the successful activation message, the activation result message carrying the eUICC ID and the IMSI.

11. The method according to any one of claims 1 to 6, comprising:
receiving (S209), by the remote subscription management platform, a deactivation request message sent by the target operator, the deactivation request message carrying the IMSI corresponding to the eUICC and the eUICC ID;
sending (S210), by the remote subscription management platform, a deactivation instruction message to the eUICC according to the eUICC ID, the deactivation instruction message carrying the IMSI, the deactivation instruction message being configured to instruct the eUICC to deactivate the profile of the target operator by using the IMSI;
receiving (S211), by the remote subscription management platform, a deactivation result message sent by the eUICC, the deactivation result message comprising the eUICC ID and the identification information of the target operator, the deactivation result message being configured to indicate whether the profile of the target operator has been successfully deactivated; and
updating (S212), by the remote subscription management platform, when the deactivation result message indicates that the profile has been successfully deactivated, a first field in an eUICC information set from an activated state to a non-activated state according to the eUICC ID.

12. A method for activating an embedded Universal Integrated Circuit Card, eUICC, **characterized in that** the method comprises:
receiving (701), by the eUICC, an activation instruction message sent by a remote subscription management platform, the activation instruction message carrying an International Mobile Subscriber Identification Number, IMSI, and a temporary code number corresponding to the IMSI sent by a target operator;
activating (702), by the eUICC, a profile of the target operator based on the activation instruction message;
associating (702), by the eUICC, after the activation is completed, the IMSI with the temporary code number;
sending (703), by the eUICC, after the association is completed, an enabling success message to a corresponding terminal, the enabling success message carrying the temporary code number, the enabling success message being configured to trigger the terminal to access a network of the target operator by using the temporary code number;
receiving (704), by the eUICC, an access result message sent by the terminal, the access result message being configured to indicate whether the terminal has successfully accessed the network of the target operator;
sending (705), by the eUICC, an access result message to the remote subscription management platform, the access result message comprising identification information of the eUICC, eUICC ID, and identification information of the target operator;
receiving (706), by the eUICC, a code number release request message sent by the remote subscription management platform, the code number release request message being configured to trigger the eUICC to release the temporary code number of the target operator;
releasing (707), by the eUICC, the temporary code number of the target operator based on the code number release request message; and
sending, by the eUICC, after the release is completed, a successful activation message to the remote subscription management platform.

13. A computer storage medium having stored therein computer-executable instructions for executing the method for activating an embedded Universal Integrated Circuit Card, eUICC, according to any one of claims 1-1 when executed by a remote subscription management platform 1, or claim 12 when executed by an embedded Universal Integrated Circuit Card.

## Patentansprüche

1. Verfahren zum Aktivieren einer embedded Universal Integrated Circuit Card, eUICC, **dadurch gekennzeichnet, dass** das Verfahren umfasst:
durch eine Fernabonnementverwaltungsplattform, Senden (S101) einer Aktivierungsbefehlsnachricht an die eUICC gemäß Identifikationsinformationen der eUICC, eUICC ID, die durch einen Zielbetreiber gesendet werden, wobei die Aktivierungsbefehlsnachricht eine temporäre Codenummer und eine International Mobile Subscriber Identification Number, IMSI, trägt, die durch den Zielbetreiber gesendet werden, wobei die Aktivierungsbefehlsnachricht ausgebildet ist, um die eUICC anzuweisen, ein Profil des Zielbetreibers unter Verwendung der temporären Codenummer und der IMSI zu aktivieren;
durch die Fernabonnementverwaltungsplattform, Empfangen (S102) einer durch die eUICC gesendeten Zugriffsergebnisnachricht, wobei die Zugriffsergebnisnachricht die eUICC ID und Identifikationsinformationen des Zielbetreibers umfasst, wobei die Zugriffsergebnisnachricht ausgebildet ist, um anzugeben, ob ein Endgerät, das der eUICC entspricht, erfolgreich auf ein Netz des Zielbetreibers zugegriffen hat; und
wenn die Zugriffsergebnisnachricht angibt, dass das Endgerät erfolgreich auf das Netz des Zielbetreibers zugegriffen hat, durch die Fernabonnementverwaltungsplattform, Senden (S103) einer Codenummer-Freigabeanforderungsnachricht an die eUICC gemäß der eUICC ID, wobei die Codenummer-Freigabeanforderungsnachricht ausgebildet ist, um auszulösen, dass die eUICC die temporäre Codenummer des Zielbetreibers freigibt.

2. Verfahren nach Anspruch 1, weiter umfassend:
durch die Fernabonnementverwaltungsplattform, Empfangen einer durch den Zielbetreiber gesendeten Aktivierungsanforderungsnachricht, wobei die Aktivierungsanforderungsnachricht die IMSI trägt, die der eUICC und der eUICC ID entspricht; und
durch die Fernabonnementverwaltungsplattform, Empfangen der durch den Zielbetreiber gesendeten temporären Codenummer, wobei die temporäre Codenummer der IMSI entspricht.

3. Verfahren nach Anspruch 2, wobei die Aktivierungsanforderungsnachricht die Identifikationsinformationen des Zielbetreibers trägt, wobei das Verfahren weiter umfasst:
durch die Fernabonnementverwaltungsplattform, Beurteilen (S104), ob gegenwärtig ein Profil in einem aktivierten Zustand auf der eUICC vorhanden ist, gemäß der IMSI und der eUICC ID, derart, dass ein erstes Beurteilungsergebnis erhalten wird;
durch die Fernabonnementverwaltungsplattform, Bestimmen (S105) erster Identifikationsinformationen, die in der Aktivierungsbefehlsnachricht zu tragen sind, gemäß dem ersten Beurteilungsergebnis;
durch die Fernabonnementverwaltungsplattform, Überprüfen der eUICC; und, nachdem die Überprüfung bestanden wurde, durch die Fernabonnementverwaltungsplattform, Tragen (S106) der Identifikationsinformationen des Zielbetreibers, der ersten Identifikationsinformationen, der eUICC ID, der temporären Codenummer und der IMSI in der Aktivierungsbefehlsnachricht.

4. Verfahren nach Anspruch 3, wobei das Bestimmen erster Identifikationsinformationen, die in der Aktivierungsbefehlsnachricht zu tragen sind, gemäß dem ersten Beurteilungsergebnis durch die Fernabonnementverwaltungsplattform umfasst:
wenn das erste Beurteilungsergebnis angibt, dass gegenwärtig kein Profil in einem aktivierten Zustand auf der eUICC vorhanden ist, durch die Fernabonnementverwaltungsplattform, Einstellen der ersten Identifikationsinformationen als Null; und wenn das erste Beurteilungsergebnis angibt, dass gegenwärtig ein Profil in einem aktivierten Zustand auf der eUICC vorhanden ist, durch die Fernabonnementverwaltungsplattform, Einstellen der ersten Identifikationsinformationen als Identifikationsinformationen eines gegenwärtigen Betreibers, wobei der gegenwärtige Betreiber ein Betreiber ist, der dem Profil in dem aktivierten Zustand entspricht.

5. Verfahren nach Anspruch 4, weiter umfassend:
wenn das erste Beurteilungsergebnis angibt, dass gegenwärtig ein Profil in einem aktivierten Zustand auf der eUICC vorhanden ist, durch die Fernabonnementverwaltungsplattform, Erfassen (S107) einer Richtlinienregel des gegenwärtigen Betreibers mindestens gemäß den Identifikationsinformationen des gegenwärtigen Betreibers, wobei die Richtlinienregel des gegenwärtigen Betreibers eine Regel zum Angeben ist, ob ein Umschalten zwischen dem gegenwärtigen Betreiber und anderen Betreibern durchgeführt werden kann;
durch die Fernabonnementverwaltungsplattform, Beurteilen (S108), ob das Umschalten von einem Profil des gegenwärtigen Betreibers auf das Profil des Zielbetreibers gemäß der Richtlinienregel des gegenwärtigen Betreibers erlaubt ist, um ein zweites Beurteilungsergebnis zu erhalten; und
wenn das zweite Beurteilungsergebnis angibt, dass das Umschalten von dem Profil des gegenwärtigen Betreibers auf das Profil des Zielbetreibers erlaubt ist, durch die Fernabonnementverwaltungsplattform, Senden (S109) der Aktivierungsbefehlsnachricht an die eUICC.

6. Verfahren nach Anspruch 5, weiter umfassend: durch die Fernabonnementverwaltungsplattform, Senden (S110) des zweiten Beurteilungsergebnisses an den Zielbetreiber.

7. Verfahren nach einem der Ansprüche 1 bis 6, weiter umfassend:
durch die Fernabonnementverwaltungsplattform, Empfangen einer durch die eUICC gesendeten Erfolgreiche-Aktivierung-Nachricht; und
durch die Fernabonnementverwaltungsplattform, Aktualisieren eines ersten Feldes in einer eUICC-Information, das gemäß der eUICC ID basierend auf der Erfolgreiche-Aktivierung-Nachricht von einem nicht aktivierten Zustand in einen aktivierten Zustand eingestellt wird,
wobei das erste Feld ausgebildet ist, um einen Zustand des Profils des Zielbetreibers zu beschreiben, wobei der Zustand des Profils den aktivierten Zustand und den nicht aktivierten Zustand umfasst.

8. Verfahren nach Anspruch 7, weiter umfassend:
durch die Fernabonnementverwaltungsplattform, Abfragen (S204) von Verknüpfungsinformationen in den gemäß der IMSI und der eUICC ID eingestellten eUICC-Informationen, um Identifikationsinformationen des ersten Feldes zu erhalten; und
durch die Fernabonnementverwaltungsplattform, Bestimmen (S205) des ersten Feldes gemäß den Identifikationsinformationen des ersten Feldes.

9. Verfahren nach Anspruch 7, weiter umfassend:
durch die Fernabonnementverwaltungsplattform, Aktualisieren (S207) eines zweiten Feldes in den eUICC-Informationen, das gemäß der eUICC ID basierend auf der Erfolgreiche-Aktivierung-Nachricht von dem aktivierten Zustand in den nicht aktivierten Zustand eingestellt wird,
wobei das zweite Feld ausgebildet ist, um einen Zustand des Profils des gegenwärtigen Betreibers zu beschreiben.

10. Verfahren nach Anspruch 7, weiter umfassend:
durch die Fernabonnementverwaltungsplattform, Senden (S208) einer Aktivierungsergebnisnachricht an den Zielbetreiber und/oder den gegenwärtigen Betreiber, basierend auf der Erfolgreiche-Aktivierung-Nachricht, wobei die Aktivierungsergebnisnachricht die eUICC ID und die IMSI trägt.

11. Verfahren nach einem der Ansprüche 1 bis 6, umfassend:
durch die Fernabonnementverwaltungsplattform, Empfangen (S209) einer durch den Zielbetreiber gesendeten Deaktivierungsanforderungsnachricht, wobei die Deaktivierungsanforderungsnachricht die IMSI trägt, die der eUICC und der eUICC ID entspricht;
durch die Fernabonnementverwaltungsplattform, Senden (S210) einer Deaktivierungsbefehlsnachricht an die eUICC gemäß der eUICC ID, wobei die Deaktivierungsbefehlsnachricht die IMSI trägt, wobei die Deaktivierungsbefehlsnachricht ausgebildet ist, um die eUICC anzuweisen, das Profil des Zielbetreibers unter Verwendung der IMSI zu deaktivieren;
durch die Fernabonnementverwaltungsplattform, Empfangen (S211) einer durch die eUICC gesendeten Deaktivierungsergebnisnachricht, wobei die Deaktivierungsergebnisnachricht die eUICC ID und die Identifikationsinformationen des Zielbetreibers umfasst, wobei die Deaktivierungsergebnisnachricht ausgebildet ist, um anzugeben, ob das Profil des Zielbetreibers erfolgreich deaktiviert wurde; und wenn die Deaktivierungsergebnisnachricht angibt, dass das Profil erfolgreich deaktiviert wurde, durch die Fernabonnementverwaltungsplattform, Aktualisieren (S212) eines ersten Feldes in einer eUICC-Information, das gemäß der eUICC ID von einem aktivierten Zustand in einen nicht aktivierten Zustand eingestellt wird.

12. Verfahren zum Aktivieren einer embedded Universal Integrated Circuit Card, eUICC, **dadurch gekennzeichnet, dass** das Verfahren umfasst:
durch die eUICC, Empfangen (701) einer von einer Fernabonnementverwaltungsplattform gesendeten Aktivierungsbefehlsnachricht, wobei die Aktivierungsbefehlsnachricht eine International Mobile Subscriber Identification Number, IMSI, und eine temporäre Codenummer trägt, die der durch einen Zielbetreiber gesendeten IMSI entspricht;
durch die eUICC, Aktivieren (702) eines Profils des Zielbetreibers basierend auf der Aktivierungsbefehlsnachricht;
nachdem die Aktivierung abgeschlossen wurde, durch die eUICC, Verknüpfen (702) der IMSI mit der temporären Codenummer;
nachdem die Verknüpfung abgeschlossen wurde, durch die eUICC, Senden (703) einer Aktivierungserfolgsnachricht an ein entsprechendes Endgerät, wobei die Aktivierungserfolgsnachricht die temporäre Codenummer trägt, wobei die Aktivierungserfolgsnachricht ausgebildet ist, um auszulösen, dass das Endgerät unter Verwendung der temporären Codenummer auf ein Netz des Zielbetreibers zugreift;
durch die eUICC, Empfangen (704) einer durch das Endgerät gesendeten Zugriffsergebnisnachricht, wobei die Zugriffsergebnisnachricht ausgebildet ist, um anzugeben, ob das Endgerät erfolgreich auf das Netz des Zielbetreibers zugegriffen hat;
durch die eUICC, Senden (705) einer Zugriffsergebnisnachricht an die Fernabonnementverwaltungsplattform, wobei die Zugriffsergebnisnachricht Identifikationsinformationen der eUICC, eUICC ID, und Identifikationsinformationen des Zielbetreibers umfasst;
durch die eUICC, Empfangen (706) einer durch die Fernabonnementverwaltungsplattform gesendeten Codenummer-Freigabeanforderungsnachricht, wobei die Codenummer-Freigabeanforderungsnachricht ausgebildet ist, um auszulösen, dass die eUICC die temporäre Codenummer des Zielbetreibers freigibt;
durch die eUICC, Freigeben (707) der temporären Codenummer des Zielbetreibers basierend auf der Codenummer-Freigabeanforderungsnachricht; und
nachdem die Freigabe abgeschlossen wurde, durch die eUICC, Senden einer Erfolgreiche-Aktivierung-Nachricht an die Fernabonnementverwaltungsplattform.

13. Computer-Speichermedium, das darin computerausführbare Befehle zum Ausführen eines Verfahrens zum Aktivieren einer embedded Universal Integrated Circuit Card, eUICC, nach einem der Ansprüche 1 bis 1, wenn sie durch eine Fernabonnementverwaltungsplattform 1 ausgeführt werden, oder Anspruch 12, wenn sie durch eine embedded Universal Integrated Circuit Card ausgeführt werden, umfasst.

## Revendications

1. Procédé d'activation d'une carte de circuit intégré universelle intégrée, eUICC, **caractérisé en ce que** le procédé comprend :
l'envoi (S101), par une plate-forme de gestion d'abonnement à distance, d'un message d'instruction d'activation à l'eUICC en fonction d'informations d'identification de l'eUICC, eUICC ID, envoyées par un opérateur cible, le message d'instruction d'activation transportant un numéro de code temporaire et un numéro d'identification internationale d'abonné mobile, IMSI, envoyé par l'opérateur cible, le message d'instruction d'activation étant configuré pour donner instruction à l'eUICC d'activer un profil de l'opérateur cible en utilisant le numéro de code temporaire et l'IMSI ;
la réception (S102), par la plate-forme de gestion d'abonnement à distance, d'un message de résultat d'accès envoyé par l'eUICC, le message de résultat d'accès comprenant l'ID d'eUICC et des informations d'identification de l'opérateur cible, le message de résultat d'accès étant configuré pour indiquer qu'un terminal correspondant à l'eUICC a accédé avec succès à un réseau de l'opérateur cible ; et
quand le message de résultat d'accès indique que le terminal a accédé avec succès au réseau de l'opérateur cible, l'envoi (S103), par la plate-forme de gestion d'abonnement à distance, d'un message de demande de divulgation du numéro de code à l'eUICC en fonction de l'ID d'eUICC, le message de demande de divulgation du numéro de code étant configuré pour déclencher l'eUICC pour divulguer le numéro de code temporaire de l'opérateur cible.

2. Procédé selon la revendication 1, comprenant en outre :
la réception, par la plate-forme de gestion d'abonnement à distance, d'un message de demande d'activation envoyé par l'opérateur cible, le message de demande d'activation transportant l'IMSI correspondant à l'eUICC et l'ID d'eUICC ; et
la réception, par la plate-forme de gestion d'abonnement à distance, du numéro de code temporaire envoyé par l'opérateur cible, le numéro de code temporaire correspondant à l'IMSI.

3. Procédé selon la revendication 2, dans lequel le message de demande d'activation transporte les informations d'identification de l'opérateur cible, le procédé comprenant en outre :
le fait de juger (S104), par la plate-forme de gestion d'abonnement à distance, si un profil dans un état activé est présent actuellement sur l'eUICC en fonction de l'IMSI et de l'ID d'eUICC, de manière à obtenir un premier résultat de jugement ;
la détermination (S105), par la plate-forme de gestion d'abonnement à distance, de premières informations d'identification à transporter dans le message d'instruction d'activation en fonction du premier résultat de jugement ;
la validation, par la plate-forme de gestion d'abonnement à distance, de l'eUICC ; et le transport (S106), par la plate-forme de gestion d'abonnement à distance, après que la validation a réussi, des informations d'identification de l'opérateur cible, des premières informations d'identification, de l'ID d'eUICC, du numéro de code temporaire et de l'IMSI dans le message d'instruction d'activation.

4. Procédé selon la revendication 3, dans lequel la détermination, par la plate-forme de gestion d'abonnement à distance, de premières informations d'identification à transporter dans le message d'instruction d'activation en fonction du premier résultat de jugement comprend :
quand le premier résultat de jugement indique qu'il n'existe pas de profil dans un état activé qui est présent actuellement sur l'eUICC, la définition, par la plate-forme de gestion d'abonnement à distance, des premières informations d'identification comme nulles ; et
quand le premier résultat de jugement indique qu'un profil dans un état activé est présent actuellement sur l'eUICC, la définition, par la plate-forme de gestion d'abonnement à distance, des premières informations d'identification comme des informations d'identification d'un opérateur actuel, l'opérateur actuel étant un opérateur correspondant au profil dans l'état activé.

5. Procédé selon la revendication 4, comprenant en outre :
quand le premier résultat de jugement indique qu'un profil dans un état activé est présent actuellement sur l'eUICC, l'acquisition (S107), par la plate-forme de gestion d'abonnement à distance, d'une règle de politique de l'opérateur actuel au moins en fonction des informations d'identification de l'opérateur actuel, la règle de politique de l'opérateur actuel étant une règle pour spécifier si une commutation peut être réalisée entre l'opérateur actuel et d'autres opérateurs ;
le fait de juger (S108), par la plate-forme de gestion d'abonnement à distance, si une commutation d'un profil de l'opérateur actuel au profil de l'opérateur cible est autorisée en fonction de la règle de politique de l'opérateur actuel, de manière à obtenir un deuxième résultat de jugement ; et
quand le deuxième résultat de jugement indique que la commutation du profil de l'opérateur actuel au profil de l'opérateur cible est autorisée, l'envoi (S109), par la plate-forme de gestion d'abonnement à distance, du message d'instruction d'activation à l'eUICC.

6. Procédé selon la revendication 5, comprenant en outre : l'envoi (S110), par la plate-forme de gestion d'abonnement à distance, du deuxième résultat de jugement à l'opérateur cible.

7. Procédé selon l'une quelconque des revendications 1 à 6, comprenant en outre :
la réception, par la plate-forme de gestion d'abonnement à distance, d'un message d'activation réussie envoyé par l'eUICC ; et
la mise à jour, par la plate-forme de gestion d'abonnement à distance, d'un premier champ dans un ensemble d'informations d'eUICC d'un état non activé à un état activé en fonction de l'ID d'eUICC sur la base du message d'activation réussie,
dans lequel le premier champ est configuré pour décrire un état du profil de l'opérateur cible, l'état du profil comprenant l'état activé et l'état non activé.

8. Procédé selon la revendication 7, comprenant en outre :
l'interrogation (S204), par la plate-forme de gestion d'abonnement à distance, d'informations d'association dans l'ensemble d'informations d'eUICC en fonction de l'IMSI et de l'ID d'eUICC, de manière à obtenir des informations d'identification du premier champ ; et
la détermination (S205), par la plate-forme de gestion d'abonnement à distance, du premier champ en fonction des informations d'identification du premier champ.

9. Procédé selon la revendication 7, comprenant en outre :
la mise à jour (S207), par la plate-forme de gestion d'abonnement à distance, d'un deuxième champ dans l'ensemble d'informations d'eUICC de l'état activé à l'état non activé en fonction de l'ID d'eUICC sur la base du message d'activation réussie,
dans lequel le deuxième champ est configuré pour décrire un état du profil de l'opérateur actuel.

10. Procédé selon la revendication 7, comprenant en outre :
l'envoi (S208), par la plate-forme de gestion d'abonnement à distance, d'un message de résultat d'activation à l'opérateur cible et/ou l'opérateur actuel sur la base du message d'activation réussie, le message de résultat d'activation transportant l'ID d'eUICC et l'IMSI.

11. Procédé selon l'une quelconque des revendications 1 à 6, comprenant :
la réception (S209), par la plate-forme de gestion d'abonnement à distance, d'un message de demande de désactivation envoyé par l'opérateur cible, le message de demande de désactivation transportant l'IMSI correspondant à l'eUICC et l'ID d'eUICC ;
l'envoi (S210), par la plate-forme de gestion d'abonnement à distance, d'un message d'instruction de désactivation à l'eUICC en fonction de l'ID d'eUICC, le message d'instruction de désactivation transportant l'IMSI, le message d'instruction de désactivation étant configuré pour donner instruction à l'eUICC de désactiver le profil de l'opérateur cible en utilisant l'IMSI ;
la réception (S211), par la plate-forme de gestion d'abonnement à distance, d'un message de résultat de désactivation envoyé par l'eUICC, le message de résultat de désactivation comprenant l'ID d'eUICC et les informations d'identification de l'opérateur cible, le message de résultat de désactivation étant configuré pour indiquer si le profil de l'opérateur cible a été désactivé avec succès ; et
la mise à jour (S212), par la plate-forme de gestion d'abonnement à distance, quand le message de résultat de désactivation indique que le profil a été désactivé avec succès, d'un premier champ dans un ensemble d'informations d'eUICC d'un état activé à un état non activé en fonction de l'ID d'eUICC.

12. Procédé d'activation d'une carte de circuit intégré universelle intégrée, eUICC, **caractérisé en ce que** le procédé comprend :
la réception (701), par l'eUICC, d'un message d'instruction d'activation envoyé par une plate-forme de gestion d'abonnement à distance, le message d'instruction d'activation transportant un numéro d'identification internationale d'abonné mobile, IMSI, et un numéro de code temporaire correspondant à l'IMSI envoyé par un opérateur cible ;
l'activation (702), par l'eUICC, d'un profil de l'opérateur cible sur la base du message d'instruction d'activation ;
l'association (702), par l'eUICC, après que l'activation est achevée, de l'IMSI avec le numéro de code temporaire ;
l'envoi (703), par l'eUICC, après que l'activation est achevée, d'un message de succès d'autorisation à un terminal correspondant, le message de succès d'autorisation transportant le numéro de code temporaire, le message de succès d'autorisation étant configuré pour déclencher le terminal pour accéder à un réseau de l'opérateur cible en utilisant le numéro de code temporaire ;
la réception (704), par l'eUICC, d'un message de résultat d'accès envoyé par le terminal, le message de résultat d'accès étant configuré pour indiquer si le terminal a accédé avec succès au réseau de l'opérateur cible ;
l'envoi (705), par l'eUICC, d'un message de résultat d'accès à la plate-forme de gestion d'abonnement à distance, le message de résultat d'accès comprenant des informations d'identification de l'eUICC, eUICC ID, et des informations d'identification de l'opérateur cible ;
la réception (706), par l'eUICC, d'un message de demande de divulgation du numéro de code envoyé par la plate-forme de gestion d'abonnement à distance, le message de demande de divulgation du numéro de code étant configuré pour déclencher l'eUICC pour divulguer le numéro de code temporaire de l'opérateur cible ;
la divulgation (707), par l'eUICC, du numéro de code temporaire de l'opérateur cible sur la base du message de demande de divulgation du numéro de code ; et
l'envoi, par l'eUICC, après que la divulgation est achevée, d'un message d'activation réussie à la plate-forme de gestion d'abonnement à distance.

13. Support de stockage informatique ayant des instructions exécutables par ordinateur stockées dessus, pour exécuter le procédé d'activation d'une carte de circuit intégré universelle intégrée, eUICC, selon l'une quelconque des revendications 1 à 11 quand elles sont exécutées par une plate-forme de gestion d'abonnement à distance ou la revendication 12 quand elles sont exécutées par une carte de circuit intégré universelle intégrée.
